(19) **Europäisches Patentamt**
**European Patent Office**
**Office européen des brevets**

(11) **EP 3 279 870 A1**

(12) **EUROPÄISCHE PATENTANMELDUNG**

(43) Veröffentlichungstag:
**07.02.2018   Patentblatt 2018/06**

(51) Int Cl.:
**G07B 15/06** (2011.01)       **G01S 19/20** (2010.01)
**G01S 19/48** (2010.01)      **G01C 21/28** (2006.01)
**G01S 19/14** (2010.01)

(21) Anmeldenummer: **16001711.7**

(22) Anmeldetag: **01.08.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Toll Collect GmbH**
**10785 Berlin (DE)**

(72) Erfinder:
• **Jestädt, Thomas**
  **10825 Berlin (DE)**
• **Röske, Thomas**
  **14469 Potsdam (DE)**

(54) **DATENVERARBEITUNGSEINRICHTUNG, SYSTEM UND VERFAHREN ZUR PRÜFUNG DER ERFÜLLUNG DER BESTIMMUNGSGEMÄSSEN FUNKTION EINER POSITIONSBESTIMMUNGSEINRICHTUNG**

(57)     Die Erfindung stellt eine Datenverarbeitungseinrichtung (11 / 50,51), ein System (70), und ein Verfahren zur Prüfung der Erfüllung der bestimmungsgemäßen Funktion einer Positionsbestimmungseinrichtung (12 /10, 30) bereit, wobei einer ersten Standortpositionen (81), die von der Positionsbestimmungseinrichtung (12/10, 30) stammt, eine Positionsbestimmungsunterbrechungsphase folgt, in der wenigstens eine, ausgehend von der ersten Standortposition (81) zurückgelegte, erste Weglänge (s) bestimmt wird, wobei in Abhängigkeit von einer fehlenden oder bestehenden Korrelation eines gespeicherten Geo-Objekts (91a, 93a, 94) mit der ersten Standortortposition (81) ein Fehlersignal erzeugt wird, wenn die erste Weglänge (s) größer ist als eine Referenzweglänge (L, W).

Fig. 3a

**Fig. 3a'**

**Beschreibung**

Die vorliegende Erfindung betrifft eine Datenverarbeitungseinrichtung gemäß dem Oberbegriff des Anspruchs 1, ein System nach dem Oberbegriff des Anspruchs 14 und ein Verfahren nach dem Oberbegriff des Anspruches 15.

Eine von einem Fahrzeug bei der Zurücklegung eines Weges mitgeführte Positionsbestimmungseinrichtung dient zur Bestimmung der momentanen Standortposition des dieses Fahrzeugs, die mit der Standortposition der Positionsbestimmungseinrichtung gleichgesetzt werden kann. Entlang eines zurückgelegten Weges bestimmte Standortpositionen können dazu dienen zu bestimmen, ob der zurückgelegte Weg einen mautpflichtigen Streckenabschnitt aufweist und falls ja, welchen (Mauterkennung) und welche Mautgebühr dafür zu erheben ist (Mautbestimmung).

Zur bestimmungsgemäßen Funktion einer solchen Positionsbestimmungseinrichtung im Regelbetrieb zählen (a) der Empfang von Navigationssignalen von Navigationssatelliten eines Globalen Navigationssatellitensystems (GNSS), (b) Bestimmung wenigstens einer Standortposition der Positionsbestimmungseinrichtung anhand der empfangenen Navigationssignale und (c) die Bereitstellung der wenigstens einen bestimmten Standortposition an einer Schnittstelle zur Weiterverarbeitung durch eine an diese Schnittstelle angeschlossene oder mit dieser Schnittstelle in Kommunikation stehende Datenverarbeitungseinrichtung.

Jede einzelne dieser Teilfunktionen kann gestört sein, wodurch die Positionsbestimmungseinrichtung ihre bestimmungsgemäßen Funktion nicht erfüllen kann. So kann (a) der Empfang von Navigationssignalen durch eine gebrochene Zuleitung zur Empfangsantenne oder durch einen Ausfall von Satelliten des GNSS unterbunden sein. Außerdem kann der Empfang von Navigationssignalen durch Störsignale behindert werden (Jamming), was in Folge (b) die Bestimmung einer Standortposition anhand von Navigationssignalen ausschließt, die aus der Überlagerung mit dem Störsignal nicht herausgefiltert werden können. Ferner kann durch (b) einen Defekt der Positionsbestimmungseinrichtung, insbesondere ihrer Schnittstelle, die Bereitstellung der bestimmten Standortposition ausgeschlossen sein.

Im Falle von Beeinträchtigungen beim Empfang und durch Jamming kann in Fahrzeugen, die zusätzlich zur Positionsbestimmungseinrichtung über eine Fahrzeugbewegungssensorik mit einer Geschwindigkeits- und/ oder Weglängenmesseinrichtung zur Bestimmung von zurückgelegten Wegstrecken sowie einer Gierratenmesseinrichtung (zum Beispiel ein Gyroskop oder einen lateralen Beschleunigungssensor) zur Bestimmung der Fahrtrichtung verfügt, die zuletzt mittels der Positionsbestimmungseinrichtung bestimmte Standortposition über eine gewisse Strecke fortgeschrieben werden, die im Laufe der Zeit und/ oder des zurückgelegten Wegs mangels aufgrund sich addierender Messunsicherheiten jedoch immer ungenauer wird.

Die zuverlässige Bestimmung einer Position des Fahrzeugs ist daher trotz dieses "Dead Reckoning" oftmals schon nach wenigen 100 Metern oder wenigen Kilometern nicht mehr möglich.

Die von der Positionsbestimmungseinrichtung im Regelbetrieb bereitgestellte Standortposition kann die ausschließlich aus den Navigationssignalen bestimmte GNSS-Position sein. Sie kann auch eine Koppelortungsposition, bei der die GNSS-Position durch die Messwerte der Fahrzeugbewegungssensorik im Zuge einer Koppelortung verbessert wurde, sein. In diesem Fall, empfängt die Positionsbestimmungseinrichtung die Messwerte (Geschwindigkeit und/ oder Weglänge sowie Gierrate, laterale Beschleunigung und/ oder Fahrtrichtung) über eine Schnittstelle zur Fahrzeugbewegungssensorik, und stellt die Koppelorfungsposition als Standortposition bereit.

Alternativ, beispielsweise ohne die Fahrzeugbewegungssensorik oder eine Schnittstelle zu ihr, stellt die Positionsbestimmungseinrichtung die GNSS-Position als Standortposition bereit.

Eine Datenverarbeitungseinrichtung, beispielsweise ein Prozessor einer Fahrzeugeinrichtung, die die Positionsbestimmungseinrichtung umfasst, kann bei Zugriff auf Messwerte der Fahrzeugbewegungssensorik aus dieser bereitgestellten GNSS-Position ebenfalls eine Koppelortungsposition bestimmen.

Jedoch ist dies - wie bereits erwähnt - nur über eine kurze Strecke mit einer für eine Mauterkennung ausreichenden Genauigkeit möglich.

Eine ausbleibende Bereitstellung von durch zu erwartenden GNSS-Positionen kann auf einen Defekt an der Schnittstelle zu oder der Positionsbestimmungseinrichtung selbst zurückzuführen sein. Ein bevorstehender Total-Ausfall der Schnittstelle oder der Positionsbestimmungseinrichtung kann sich durch eine vorübergehenden Mangel an Positionsdatenbereitstellungen durch die Positionsbestimmungseinrichtung bemerkbar machen.

Dies vorausgeschickt ergibt sich die Aufgabe zu ermitteln, ob ein a) ausbleibender Empfang von Navigationssignalen, b) eine ausbleibende Bestimmung einer GNSS-Position und/ oder c) eine ausbleibende Bereitstellung einer zu erwartenden GNSS-Position durch die Positionsbestimmungseinrichtung deterministischer Natur ist-das heißt auf Signalabschattungseffekte in topographiebedingten Störungsgebieten, beispielsweise Tunneln und Schluchten, (kurz: Störungsgebiet) zurückzuführen und somit als topographiebedingte Störung vorhersehbar ist - oder nichtdeterministischer Natur ist - das heißt auf einen Einfluss zurückzuführen ist, der einem Defekt oder einer mutwilligen Störung des GNSS (z. B. durch Jamming) entspricht und somit als systembedingte Störung nicht vorhersehbar ist. Dabei können aus Gründen der Bedeutsamkeit Ausfälle, die nur über einen kurzen Zeitraum oder über eine kurze Strecke auftreten, unberücksichtigt bleiben.

Diese Aufgabe wird durch eine Datenverarbeitungseinrichtung, ein System und ein Verfahren gemäß den unabhängigen Ansprüchen gelöst. Vorteilhafte Weiterbildungen sind Gegenstand abhängiger Ansprüche. Merkmale, Vorteile verschiedener Ausführungsformen, Ausführungsbeispiele und Anspruchskategorien sowie Bemerkungen dazu gelten jeweils auf andere Ausführungsformen, Ausführungsbeispiele und Anspruchskategorien übertragbar oder austauschbar, soweit dies technisch und widerspruchsfrei im Rahmen der vorliegenden Erfindung möglich ist.

Vereinfacht stellt die Erfindung eine Datenverarbeitungseinrichtung und ein Verfahren zur Prüfung der Erfüllung der bestimmungsgemäßen Funktion einer Positionsbestimmungseinrichtung bereit, wobei einer ersten Standortpositionen, die von der Positionsbestimmungseinrichtung stammt, eine Positionsbestimmungsunterbrechungsphase folgt, in der wenigstens eine, ausgehend von der ersten Standortposition zurückgelegte, erste Weglänge bestimmt wird, wobei in Abhängigkeit von einer fehlenden oder bestehenden Korrelation eines gespeicherten Geo-Objekts mit der ersten Standortortposition ein Fehlersignal erzeugt wird, wenn die erste Weglänge größer ist als eine Referenzweglänge.

Gemäß einem ersten Aspekt der Erfindung wird eine Datenverarbeitungseinrichtung bereitgestellt, welche ausgebildet ist, wenigstens eine erste Standortposition, die einen Standort einer von einem Fahrzeug mitgeführten Positionsbestimmungseinrichtung repräsentiert, von dieser Positionsbestimmungseinrichtung zu empfangen oder aus Positionsdaten zu erzeugen, die sie von dieser Positionsbestimmungseinrichtung empfangen hat, wenigstens eine erste Weglänge, die ausgehend von der ersten Standortposition von dem Fahrzeug zurückgelegt wurde, zu empfangen oder zu bestimmen und wenigstens einen ersten Datenspeicher aufweist oder zumindest zeitweise kommunikationstechnisch an einen solchen gekoppelt ist, in dem wenigstens ein Geo-Objekt, das durch wenigstens eine vorbestimmte Position gekennzeichnet ist, gespeichert ist, wobei die Datenverarbeitungseinrichtung ausgebildet ist, das Vorliegen einer Positionsbestimmungsunterbrechungsphase daran festzustellen, dass die Bereitstellung wenigstens einer, einer ersten Standortposition zeitlich nachfolgenden, zweiten Standortposition von einer vorgegebenen Mindestgüte, gänzlich oder von zu deren Erzeugung dienlichen Positionsdaten durch die Positionsbestimmungseinrichtung unterbleibt, zu ermitteln, ob die erste Standortposition räumlich mit wenigstens einem gespeicherten Geo-Objekt korreliert, und in Abhängigkeit von einem ermittelten Mangel oder Bestehen einer räumlichen Korrelation der ersten Standortposition mit wenigstens einem gespeicherten Geo-Objekt ein Fehlersignal zu erzeugen, wenn (i) sie das Vorliegen einer Positionsbestimmungsunterbrechungsphase feststellen konnte und (ii) die erste Weglänge größer ist als eine Referenzweglänge.

Dabei versteht es sich von selbst, dass die Datenverarbeitungseinrichtung ausgebildet ist, das Fehlersignal nur dann zu erzeugen, wenn sie das Vorliegen einer Positionsbestimmungsunterbrechungsphase festgestellt hat. Diese Feststellung bildet nämlich die Voraussetzung dafür, dass die erste Standortposition, die über die Existenz der Positionsbestimmungsunterbrechungsphase definiert wird, überhaupt für die Korrelationsprüfung zur Verfügung steht. Standort und Standortposition sind dabei in dem Sinne zu verstehen, dass sie zumindest zu einem Zeitpunkt dem Ort der Anwesenheit und der Position des Ortes der Anwesenheit des Fahrzeugs entsprechen, ohne dass das Fahrzeug dabei stehen muss, wobei das Fahrzeug insbesondere zu dem Zeitpunkt, an dem es am Standort anwesend ist, in Bewegung sein kann.

Insbesondere ist die erste Standortposition von einer vorgegebenen Mindestgüte, das heißt: ihre Güte ist nicht schlechter als eine vorgegebene Mindestgüte, weil die Feststellung des Vorliegens einer Positionsbestimmungsunterbrechungsphase darauf beruht, dass insbesondere der ersten Standortposition folgende Standortpositionen nicht die vorgegebene Mindestgüte aufweisen.

Vorzugsweise sind in dem ersten Datenspeicher mehrere, durch wenigstens eine vorbestimmte Position gekennzeichnete, Geo-Objekte gespeichert. Dies erhöht die Auswahl an möglichen korrelierenden Geo-Objekten. Wo immer im Folgenden von mehreren gespeicherten Geo-Objekten die Rede ist, gelten die Aussagen auch für einen ersten Datenspeicher mit nur einem gespeicherten Geo-Objekt, es sei denn es ergibt sich aus dem Zusammenhang die Notwendigkeit des Vorliegens mehrerer im ersten Datenspeicher gespeicherter Geo-Objekte. Unabhängig können, wenn auch weniger bevorzugt, mehrere Geo-Objekte auf verschiedene Datenspeicher verteilt gespeichert sein, die von der Datenverarbeitungseinrichtung umfasst oder zumindest zeitweise kommunikationstechnisch an diese gekoppelt sind.

Beispielsweise repräsentiert die erste Standortposition zu einem ersten Zeitpunkt den Standort der von dem Fahrzeug mitgeführten Positionsbestimmungseinrichtung, und die erste Weglänge entspricht der Weglänge, die seit dem ersten Zeitpunkt von dem Fahrzeug zurückgelegt wurde.

Insbesondere ist die Datenverarbeitungseinrichtung ausgebildet, nur dann ein Fehlersignal zu erzeugen, wenn die erste Weglänge der von dem Fahrzeug ausgehend von der ersten Standortposition zurückgelegten Weglänge zu einem Zeitpunkt entspricht, der innerhalb der Positionsbestimmungsunterbrechungsphase liegt.

Bevorzugt ist die Datenverarbeitungseinrichtung ausgebildet, nach Feststellung des Vorliegens einer Positionsbestimmungsunterbrechungsphase zu prüfen, ob sie eine der ersten Standortposition zeitlich nachfolgenden, zweiten Standortposition von einer vorgegebenen Mindestgüte oder zu deren Erzeugung dienliche Positionsdaten von der Positionsbestimmungseinrichtung empfängt, und im Falle des Empfangs einer der ersten Standortposition zeitlich nachfolgenden, zweiten Standortposition von einer vorgegebenen Mindestgüte oder zu deren Erzeugung dienliche Positionsdaten von der Positionsbestimmungseinrichtung eine Beendigung der Positionsbestimmungsunterbrechungsphase festzustellen und die Bestimmung erster Weglängen, die von dem Fahrzeug ausgehend von der ersten Standortposition zu Zeitpunkten zurückgelegt wurden, die außerhalb der Positionsbestimmungsunterbrechungsphase liegen, einzustellen.

Als Geo-Objekte im erfindungsgemäßen Sinn werden dabei nur solche Geo-Objekte verstanden, die aufgrund ihrer durch die vorbestimmte Position definierte Lagen eine räumliche Korrelation mit einer ersten Standortposition aufweisen können, die aus diesem Grund von dem Fahrzeug angefahren werden können muss. Bildlich gesprochen müssen die Geo-Objekte auf Straßenabschnitten liegen. Geo-Objekte, die abseits von Straßenabschnitten liegen, die von einem Fahrzeug befahren werden können, beispielsweise im Hochgebirge oder im Meer, gelten nicht als erfindungsgemäße Geo-Objekte.

Erfindungswesentlich ist es, die Erzeugung eines Fehlersignals von der fehlenden oder der bestehenden räumlichen Korrelation der ersten Standortposition mit wenigstens einem der gespeicherten Geo-Objekte abhängig zu machen. Im Rahmen dieser Maßgabe können, je nachdem, ob die räumliche Korrelation besteht oder nicht, weitere Kriterien formuliert werden, die zusätzlich erfüllt sein müssen, damit ein Fehlersignal erzeugt wird. Dabei ist zunächst sowohl entweder die bestehende als auch die fehlender Korrelation der ersten Standortposition mit wenigstens einem der gespeicherten Geo-Objekte eine eigenständige notwendige Bedingung für die Erzeugung des Fehlersignals, zu der als eine weitere notwendige Bedingung hinzutritt, dass die erste Weglänge größer ist als eine Referenzweglänge, damit es zur Erzeugung des Fehlersignals kommt. Gemeinsam können diese beiden notwendigen Bedingungen hinreichend sein. Dies ist jedoch nicht zwingend. Es können stattdessen eine oder mehrere weitere notwendige Bedingungen vorgesehen sein, die gemeinsamen mit erfindungsgemäßen Bedingungen hinreichend für die Erzeugung des Fehlersignals sind. Insbesondere ist die erfindungsgemäße Datenverarbeitungseinrichtung ausgebildet zur Ermittlung einer räumlichen Korrelation der ersten Standortposition mit wenigstens einem gespeicherten Geo-Objekt einen Vergleich der ersten Standortposition mit der wenigstens einen vorbestimmten Position wenigstens eines gespeicherten Geo-Objekts durchzuführen und eine räumliche Korrelation mit wenigstens einem gespeicherten Geo-Objekt nur dann festzustellen, wenn die erste Standortposition bezüglich der wenigstens einen jeweiligen vorbestimmten Position wenigstens eine Bedingung erfüllt.

Vorzugsweise ist die erfindungsgemäße Datenverarbeitungseinrichtung ausgebildet, von wenigstens einer, von dem Fahrzeug mitgeführten, Beschleunigungs-, Geschwindigkeits- und/ oder Weglängenmesseinrichtung wenigstens einen Beschleunigungs-, Geschwindigkeits- und/ oder Weglängenmesswert zu empfangen, und aus wenigstens einem ersten empfangenen Beschleunigungs-, Geschwindigkeits- und/ oder Weglängenmesswert wenigstens eine erste Weglänge zu bestimmen, die ausgehend von der ersten Standortposition von dem Fahrzeug zurückgelegt wurde.

Insbesondere sind die Beschleunigungsmesswerte Messwerte einer Beschleunigung des Fahrzeugs in Fahrtrichtung.

Vorzugsweise ist die erfindungsgemäße Datenverarbeitungseinrichtung ausgebildet, Standortpositionen, die zu verschiedenen Zeitpunkten den Standort einer von einem Fahrzeug mitgeführten Positionsbestimmungseinrichtung repräsentieren, von dieser Positionsbestimmungseinrichtung zu empfangen oder aus Positionsdaten zu erzeugen, die sie von dieser Positionsbestimmungseinrichtung empfangen hat, und von den empfangenen oder erzeugten Standortpositionen eine ausgewählte Standortposition als erste Standortposition zu bestimmen, die einer festgestellten Positionsbestimmungsunterbrechungsphase unmittelbar vorangeht in dem Sinne, dass der ausgewählten Standortpositionen keine Standortpositionen von vorgegebener Mindestgüte folgen, die der Positionsbestimmungsunterbrechungsphase vorangehen. Insbesondere folgt der ausgewählten Standortposition keine Standortposition von vorgegebener Mindestgüte, die die Datenverarbeitungseinrichtung nicht als Ende der Positionsbestimmungsunterbrechungsphase interpretiert.

Weniger bevorzugt kann die Datenverarbeitungseinrichtung ausgebildet sein, Standortpositionen eine ausgewählte Standortposition als erste Standortposition zu bestimmen, die einer festgestellten Positionsbestimmungsunterbrechungsphase mittelbar vorangeht in dem Sinne, dass der ausgewählten Standortpositionen eine vorgegebene Anzahl an Standortpositionen von vorgegebener Mindestgüte folgen, die der Positionsbestimmungsunterbrechungsphase vorangehen. Vorzugsweise ist diese vorgegebene Anzahl nicht größer als zwei.

Vorteilhaft kann mit der Erfindung durch die Bereitstellung von Geo-Objekten, die bekannte topographische Störungsgebiete, wie zum Beispiel Tunnel, repräsentieren, eine Referenzweglänge, die tunnelunabhängig ist, verkürzt werden, weil der Ausnahmetatbestand einer längeren Referenzweglänge an ein Geo-Objekt eines bekannten topographischen Störungsgebiets gekoppelt ist, so dass technisch - und nicht topographisch - bedingte Störungen nach einer kürzeren ersten Weglänge detektiert und durch ein erzeugtes Fehlersignal bekannt gemacht werden können.

In diesem Sinne ist die erfindungsgemäße Datenverarbeitungseinrichtung vorzugsweise ausgebildet, ein Fehlersignal zu erzeugen, wenn sie eine räumliche Korrelation der ersten Standortposition mit wenigstens einem gespeicherten Geo-Objekte feststellen konnte, wobei die Referenzweglänge eine von dem wenigstens einen mit der ersten Standortposition räumlich korrelierenden Geo-Objekt abhängige Korrelationsweglänge ist. Damit wird eine Datenverarbeitungseinrichtung bereitgestellt, welche ausgebildet ist, wenigstens eine erste Standortposition, die einen Standort einer von einem Fahrzeug mitgeführten Positionsbestimmungseinrichtung repräsentiert, von dieser Positionsbestimmungseinrichtung zu empfangen oder aus Positionsdaten zu erzeugen, die sie von dieser Positionsbestimmungseinrichtung empfangen hat, wenigstens eine erste Weglänge, die ausgehend von der ersten Standortposition von dem Fahrzeug zurückgelegt wurde, zu empfangen oder zu bestimmen und wenigstens einen ersten Datenspeicher aufweist oder zumindest zeitweise kommunikationstechnisch an einen solchen gekoppelt ist, in dem wenigstens ein Geo-Objekt, das durch wenigstens eine vorbestimmte Position gekennzeichnet ist, gespeichert ist, wobei die Datenverarbeitungseinrichtung ausgebildet ist, das Vorliegen einer Positionsbestimmungsunterbrechungsphase daran festzustellen, dass die Bereitstellung wenigstens einer, einer ersten Standortposition zeitlich nachfolgenden, zweiten Standortposition von einer vorgegebenen Mindestgüte, gänzlich oder von zu deren Erzeugung dienlichen Positionsdaten durch die Positionsbestimmungseinrichtung unterbleibt, zu ermitteln, ob die erste Standortposition räumlich mit wenigstens einem gespeicherten Geo-Objekte korreliert, und ein Fehlersignal zu erzeugen, wenn sie (i) das Vorliegen einer Positionsbestimmungsunterbrechungsphase feststellen konnte (ii) sie eine räumliche Korrelation der ersten Standortposition mit wenigstens einem gespeicherten Geo-Objekte ermitteln konnte und (iii) die erste Weglänge größer ist als eine geo-objekt-abhängige Korrelationsweglänge, die von dem ermittelten korrelierenden Geo-Objekt abhängt, das mit der ersten Standortposition räumlich korreliert.

Vorzugsweise sind die Geo-Objekte jeweils mit einer vorgegebenen geo-objekt-abhängigen Korrelationsweglänge verknüpft sind oder weisen jeweils eine Information auf, anhand der die Datenverarbeitungseinrichtung eine geo-objekt-abhängige Korrelationsweglänge bestimmt.

Beispielsweise kann ein sogenanntes Solitär-Geo-Objekt, das sich vollständig über ein Störungsgebiet erstreckt, eine Erstreckung (beispielsweise einen Durchmesser) aufweisen, anhand der die Datenverarbeitungseinrichtung die Korrelationsweglänge bestimmen kann. So kann die geo-objekt-abhängige Korrelationsweglänge der Erstreckung entsprechen, einen Faktor 1 bis 1,5 größer sein als die Korrelationsweglänge oder der Korrelationsweglänge zuzüglich einer Karenzweglänge von beispielsweise 100 m bis 1000 m entsprechen, die Ungenauigkeiten der Weglängenbestimmung Rechnung ebenso Rechnung trägt wie ein Faktor größer 1.

Beispielsweise kann ein erstes Partner-Geo-Objekt, das einen Eingang zu einem Störungsgebiet repräsentiert, mit einem zweiten Partner-Geo-Objekt (beispielsweise über eine eindeutige Kennung der Partner-Geo-Objekte), das einen Ausgang von diesem Störungsgebiet repräsentiert, verknüpft sein. Die Datenverarbeitungseinrichtung kann ausgebildet sein, das Partner-Geo-Objekt zu einem korrelierenden Geo-Objekt zu ermitteln, und eine Korrelationslänge zu bestimmen, indem sie den Abstand zwischen den vorbestimmten Positionen der Partner-Geo-Objekte oder den um einen Faktor 1 bis 1,5 gestreckten Abstand oder den um eine Karenzweglänge von beispielsweise 100 m bis 1000 m erhöhten Abstand als Korrelationslänge interpretiert.

Alternativ oder kumulativ ist die erfindungsgemäße Datenverarbeitungseinrichtung ausgebildet, ein Fehlersignal zu erzeugen, wenn sie keine räumliche Korrelation der ersten Standortposition mit wenigstens einem gespeicherten Geo-Objekt feststellen konnte, wobei die Referenzweglänge eine vorgegebene geo-objekt-unabhängige. Höchstweglänge ist. Damit wird eine Datenverarbeitungseinrichtung bereitgestellt, die ausgebildet ist, wenigstens eine erste Standortposition, die einen Standort einer von einem Fahrzeug mitgeführten Positionsbestimmungseinrichtung repräsentiert, von dieser Positionsbestimmungseinrichtung zu empfangen oder aus Positionsdaten zu erzeugen, die sie von dieser Positionsbestimmungseinrichtung empfangen hat, eine erste Weglänge, die ausgehend von der ersten Standortposition von dem Fahrzeug zurückgelegt wurde, zu empfangen oder zu bestimmen und wenigstens einen ersten Datenspeicher aufweist oder zumindest zeitweise kommunikationstechnisch an einen solchen gekoppelt ist, in dem wenigstens ein Geo-Objekt, das durch wenigstens eine vorbestimmte Position gekennzeichnet ist, gespeichert ist, wobei die Datenverarbeitungseinrichtung ausgebildet ist, das Vorliegen einer Positionsbestimmungsunterbrechungsphase daran festzustellen, dass die Bereitstellung wenigstens einer, einer ersten Standortposition zeitlich nachfolgenden, zweiten Standortposition von einer vorgegebenen Mindestgüte, gänzlich oder von zu deren Erzeugung dienlichen Positionsdaten durch die Positionsbestimmungseinrichtung unterbleibt, zu ermitteln, ob die erste Standortposition räumlich mit wenigstens einem gespeicherten Geo-Objekte korreliert, und ein Fehlersignal zu erzeugen, wenn sie keine räumliche Korrelation der ersten Standortposition mit wenigstens einem gespeicherten Geo-Objekt ermitteln konnte und die zurückgelegte erste Weglänge größer ist als eine vorgegebene geo-objekt-unabhängige Höchstweglänge. Beispielsweise ist die geo-objekt-unabhängige Höchstweglänge in demselben ersten Datenspeicher gespeichert, in dem auch das Geo-Objekt gespeichert ist beziehungsweise die Geo-Objekte gespeichert sind. Alternativ oder kumulativ kann die geo-objekt-unabhängige Höchstweglänge in einem zweiten Datenspeicher gespeichert sein, in dem das. Geo-Objekt gespeichert ist beziehungsweise die Geo-Objekte gespeichert sind. Beispielsweise kann die geo-objekt-unabhängige Höchstweglänge in dem Datenspeicher eines Sicherheitsmoduls der erfindungsgemäßen Datenverarbeitungseinrichtung gespeichert sein.

Vorzugsweise ist die erfindungsgemäße Datenverarbeitungseinrichtung ausgebildet, ein Fehlersignal zu erzeugen, wenn sie keine räumliche Korrelation der ersten Standortposition mit wenigstens einem gespeicherten Geo-Objekt feststellen konnte und die erste Weglänge größer als eine vorgegebene geo-objekt-unabhängige Höchstweglänge ist, und ein Fehlersignal zu erzeugen, wenn sie eine räumliche Korrelation der ersten Standortposition mit wenigstens einem korrelierenden gespeicherten Geo-Objekte feststellen konnte und die erste Weglänge größer ist als eine korrelierenden Geo-Objekt abhängige - insbesondere eine mit dem korrelierenden Geo-Objekt verknüpfte - Korrelationsweglänge ist. Vorzugsweise sind dabei in dem ersten Datenspeicher mehrere Geo-Objekt gespeichert, von denen jeweils eine geo-objekt-abhängige Korrelationsweglänge abhängt, und in dem ersten oder einem zweiten Datenspeicher, der von der Datenverarbeitungseinrichtung umfasst oder zumindest zeitweise kommunikationstechnisch an diese solchen gekoppelt ist, die geo-objekt-unabhängige Höchstweglänge gespeichert.

Vorzugsweise ist dabei die geo-objekt-unabhängige Höchstweglänge nicht kleiner ist als die kleinste geo-objekt-abhängige Korrelationsweglänge der gespeicherten Geo-Objekte und kleiner ist als die größte geo-objekt-abhängige Korrelationsweglänge der gespeicherten Geo-Objekte. Besonders bevorzugt ist die geo-objekt-unabhängige Höchstweglänge nicht kleiner ist als die kleinste geo-objekt-abhängige Korrelationsweglänge der gespeicherten Geo-Objekte und kleiner als das Doppelte der kleinsten geo-objekt-abhängigen Korrelationsweglänge, falls das Doppelte der kleinsten Weglänge nicht größer ist als der arithmetische Mittelwert der kleinsten geo-objekt-abhängigen Korrelationsweglänge und der größten geo-objekt-abhängigen Korrelationsweglänge, oder kleiner ist als der arithmetische Mittelwert der kleinsten geo-objekt-abhängigen Korrelationsweglänge und der größten geo-objekt-abhängigen Korrelationsweglänge, falls das Doppelte der kleinsten geo-objekt-abhängigen Korrelationsweglänge der gespeicherten Geo-Objekte größer ist als der arithmetische Mittelwert der kleinsten geo-objekt-abhängigen Korrelationsweglänge und der größten geo-objekt-abhängigen Korrelationsweglänge.

Ähnlich bevorzugt ist die geo-objekt-unabhängige Höchstweglänge nicht kleiner ist als die kleinste geo-objekt-abhängige Korrelationsweglänge der gespeicherten Geo-Objekte und kleiner als die Mehrheit der geo-objekt-abhängigen Korrelationsweglängen.

Vorzugsweise ist die erfindungsgemäße Datenverarbeitungseinrichtung ausgebildet, infolge der Feststellung des Vorliegens einer Positionsbestimmungsunterbrechungsphase wiederholt erste Weglängen zu bestimmen, die zu einander nachfolgenden Zeitpunkten ausgehend von der ersten Standortposition von dem Fahrzeug zurückgelegt wurden, die bestimmten ersten Weglängen jeweils mit einer geo-objekt-unabhängigen Höchstweglänge zu vergleichen, und dann, wenn eine bestimmte erste Weglänge die geo-objekt-unabhängige Höchstweglänge überschreitet, zu ermitteln ob die erste Standortposition räumlich mit wenigstens einem gespeicherten Geo-Objekte korreliert, und im Falle der Feststellung eines Mangels einer räumlichen Korrelation der ersten Standortposition mit einem gespeicherten Geo-Objekt, ein Fehlersignal zu erzeugen, und im Falle der Feststellung des Bestehens einer räumlichen Korrelation der ersten Standortposition mit einem korrelierenden gespeicherten Geo-Objekt die bestimmten ersten Weglängen jeweils mit einer von dem korrelierenden Geo-Objekt abhängigen Korrelationsweglänge zu vergleichen und ein Fehlersignal zu erzeugen, wenn während der Positionsbestimmungsunterbrechungsphase wenigstens eine der bestimmten ersten Weglängen die geo-objekt-abhängige Korrelationsweglänge übersteigt.

Alternativ ist die erfindungsgemäße Datenverarbeitungseinrichtung ausgebildet, infolge der Feststellung des Vorliegens einer Positionsbestimmungsunterbrechungsphase wiederholt erste Weglängen zu bestimmen, die zu einander nachfolgenden Zeitpunkten ausgehend von der ersten Standortposition von dem Fahrzeug zurückgelegt wurden, sowie zu ermitteln, ob die erste Standortposition räumlich mit wenigstens einem gespeicherten Geo-Objekte korreliert, und im Falle der Feststellung des Bestehens einer räumlichen Korrelation der ersten Standortposition mit wenigstens einem korrelierenden gespeicherten Geo-Objekt die bestimmten ersten Weglängen jeweils mit einer von dem korrelierenden Geo-Objekt abhängigen Korrelationsweglänge zu vergleichen und ein Fehlersignal zu erzeugen, wenn während der Positionsbestimmungsunterbrechungsphase wenigstens eine der bestimmten ersten Weglängen die geo-objekt-abhängige Korrelationsweglänge übersteigt, und im Falle der Feststellung des Mangels einer räumlichen Korrelation der ersten Standortposition mit einem gespeicherten Geo-Objekt die bestimmten ersten Weglängen jeweils mit einer geo-objektunabhängigen Höchstweglänge zu vergleichen und ein Fehlersignal zu erzeugen, wenn während der Positionsbestimmungsunterbrechungsphase wenigstens eine der bestimmten ersten Weglängen die geo-objektunabhängige Höchstweglänge übersteigt.

Weniger bevorzugt ist die Datenverarbeitungseinrichtung stattdessen ausgebildet, wiederholt von der Positionsbestimmungseinrichtung empfange oder aus Positionsdaten der Positionsbestimmungseinrichtung erzeugte Standortpositionen auf räumliche Korrelation mit wenigstens einem mit wenigstens einem gespeicherten Geo-Objekt zu prüfen und für den Fall, dass die Datenverarbeitungseinrichtung eine räumliche Korrelation einer korrelierenden Standortposition mit einem korrelierenden gespeicherten Geo-Objekt feststellt, die korrelierende Standortposition als erste Standortposition des Fahrzeugs zu identifizieren, wiederholt erste Weglängen zu bestimmen, die zu einander nachfolgenden Zeitpunkten ausgehend von der ersten Standortposition von dem Fahrzeug zurückgelegt wurden, und infolge der Feststellung des Vorliegens der Positionsbestimmungsunterbrechungsphase die ersten Weglängen mit einer Korrelationsweglänge zu vergleichen, die von dem korrelierenden Geo-Objekt abhängt und in dem Fall, dass eine erste Weglänge, die der von dem Fahrzeug ausgehend von der ersten Standortposition zurückgelegten Weglänge zu einem Zeitpunkt entspricht, der innerhalb der Positionsbestimmungsunterbrechungsphase liegt, größer ist als die Korrelationsweglänge.

Vorzugsweise ist die erfindungsgemäße Datenverarbeitungseinrichtung ausgebildet, infolge der Feststellung des Vorliegens einer Positionsbestimmungsunterbrechungsphase wiederholt erste Weglängen zu bestimmen, die zu einander nachfolgenden Zeitpunkten ausgehend von der ersten Standortposition von dem Fahrzeug zurückgelegt wurden, und ein Fehlersignal zu erzeugen, wenn während der Positionsbestimmungsunterbrechungsphase wenigstens eine der bestimmten ersten Weglängen die Referenzweglänge übersteigt.

Insbesondere ist die erfindungsgemäße Datenverarbeitungseinrichtung ausgebildet, infolge der Feststellung des Vorliegens einer Positionsbestimmungsunterbrechungsphase wiederholt erste Weglängen zu bestimmen, die zu einander nachfolgenden Zeitpunkten seit einem ersten Zeitpunkt von dem Fahrzeug zurückgelegt wurden, zu dem die erste Standortposition den Standort der von dem Fahrzeug mitgeführten Positionsbestimmungseinrichtung repräsentiert, und ein Fehlersignal zu erzeugen, wenn während der Positionsbestimmungsunterbrechungsphase wenigstens eine der bestimmten ersten Weglängen die Referenzweglänge übersteigt.

Vorzugweise ist die erfindungsgemäße Datenverarbeitungseinrichtung ausgebildet, eine Beendigung der Positionsbestimmungsunterbrechungsphase daran festzustellen, dass sie wenigstens eine der ersten Standortposition zeitlich nachfolgende zweite Standortposition von einer vorgegebenen Mindestgüte oder zu ihrer Erzeugung dienliche Positionsdaten von der Positionsbestimmungseinrichtung empfängt, und infolge der Feststellung einer Beendigung der Positionsbestimmungsunterbrechungsphase keine erste Weglänge zu bestimmen und/ oder einem Vergleich mit der Referenzweglänge zu unterwerfen, die von dem Fahrzeug ausgehend von der ersten Standortposition über die zweite Standortposition hinaus zurückgelegt wurde.

Insbesondere ist die erfindungsgemäße Datenverarbeitungseinrichtung ausgebildet, eine Beendigung der Positionsbestimmungsunterbrechungsphase daran festzustellen, dass sie wenigstens eine zweite Standortposition von einer vorgegebenen Mindestgüte, welche zweite Standortposition zumindest zu einem, einem ersten Zeitpunkt, zu dem die erste Standortposition den Standort der von dem Fahrzeug mitgeführten Positionsbestimmungseinrichtung repräsentiert, nachfolgenden, zweiten Zeitpunkt einen Standort der von dem Fahrzeug umfassten Positionsbestimmungseinrichtung repräsentiert, oder zu ihrer Erzeugung dienliche Positionsdaten von der Positionsbestimmungseinrichtung empfängt, und infolge der Feststellung einer Beendigung der Positionsbestimmungsunterbrechungsphase keine erste Weglänge zu bestimmen und/ oder einem Vergleich mit der Referenzweglänge zu unterwerfen, die von dem Fahrzeug ausgehend von der ersten Standortposition über die zweite Standortposition hinaus zurückgelegt wurde.

Damit wird vorteilhaft vermieden, dass die erfindungsgemäße Datenverarbeitungseinrichtung ein Fehlersignal für erste Weglängen erzeugt, die über die Erstreckung der Störungsregion, in der die Positionsbestimmungsunterbrechungsphase stattfindet, hinausgehen.

Vorzugweise ist die erfindungsgemäße Datenverarbeitungseinrichtung ausgebildet, im Falle der Feststellung des Vorliegens einer Positionsbestimmungsunterbrechungsphase so oft einander zeitlich nachfolgend die Schrittkombination (a) des Bestimmens einer ersten Weglänge, die ausgehend von der ersten Standortposition von dem Fahrzeug zurückgelegt wurde und (b) des Prüfens, ob die erste Weglänge größer ist als die Referenzweglänge, zu wiederholen, bis entweder (i) die erste Weglänge größer ist als die Referenzweglänge oder (ii) die Datenverarbeitungseinrichtung wenigstens eine, der ersten Standortposition zeitlich nachfolgende, zweite Standortposition von einer vorgegebenen Mindestgüte oder zu ihrer Erzeugung dienliche Positionsdaten von der Positionsbestimmungseinrichtung empfängt und damit das Ende der Positionsbestimmungsunterbrechungsphase feststellt, und ein Fehlersignal zu erzeugen, wenn die erste Weglänge größer ist als die Referenzweglänge, bevor die Datenverarbeitungseinrichtung das Ende der Positionsbestimmungsunterbrechungsphase feststellt.

Insbesondere ist die erfindungsgemäße Datenverarbeitungseinrichtung ausgebildet, im Falle der Feststellung des Vorliegens einer Positionsbestimmungsunterbrechungsphase so oft einander zeitlich nachfolgend die Schrittkombination (a) des Bestimmens einer ersten Weglänge, die seit einem ersten Zeitpunkt von dem Fahrzeug zurückgelegt wurde, zu dem die erste Standortposition den Standort der von dem Fahrzeug mitgeführten Positionsbestimmungseinrichtung repräsentiert und (b) des Prüfens, ob die erste Weglänge größer ist als die Referenzweglänge, zu wiederholen, bis entweder (i) die erste Weglänge größer ist als die Referenzweglänge oder (ii) die Datenverarbeitungseinrichtung wenigstens eine zweite Standortposition von einer vorgegebenen Mindestgüte, welche zweite Standortposition zumindest zu einem, dem ersten Zeitpunkt nachfolgenden, zweiten Zeitpunkt einen Standort der von dem Fahrzeug umfassten Positionsbestimmungseinrichtung repräsentiert, oder zu ihrer Erzeugung dienliche Positionsdaten von der Positionsbestimmungseinrichtung empfängt und damit das Ende der Positionsbestimmungsunterbrechungsphase feststellt, und ein Fehlersignal zu erzeugen, wenn die erste Weglänge größer ist als die Referenzweglänge, bevor die Datenverarbeitungseinrichtung das Ende der Positionsbestimmungsunterbrechungsphase feststellt.

Vorzugsweise ist die erfindungsgemäße Datenverarbeitungseinrichtung ausgebildet, das Vorliegen einer Positionsbestimmungsunterbrechungsphase daran festzustellen, dass die Bereitstellung wenigstens einer der ersten Standortpositiön zeitlich nachfolgenden zweiten Standortposition von einer vorgegebenen Mindestgüte, gänzlich oder von zu deren Erzeugung dienlichen Positionsdaten innerhalb eines vorgegebenen ersten Zeitrahmens nach der Bereitstellung der ersten Standortposition durch die Positionsbestimmungseinrichtung unterbleibt.

Beispielsweise ist der vorgegebene Zeitrahmen größer als 0,5 s und kleiner als 100 sec.

Alternativ oder kumulativ kann die erfindungsgemäße Datenverarbeitungseinrichtung ausgebildet sein, wiederholt aus von wenigstens einer, von dem Fahrzeug mitgeführten, Beschleunigungs-, Geschwindigkeits- und/ oder Weglängenmesseinrichtung empfangenen Beschleunigungs-, Geschwindigkeits- und/ oder Weglängenmesswerten Weglängen zu bestimmen, die ausgehend von der ersten Standortposition von dem Fahrzeug zurückgelegt wurden, und das Vorliegen einer Positionsbestimmungsunterbrechungsphase daran festzustellen, dass die Bereitstellung wenigstens einer der ersten Standortposition zeitlich nachfolgenden zweiten Standortposition von einer vorgegebenen Mindestgüte, gänzlich oder von zu deren Erzeugung dienlichen Positionsdaten durch die Positionsbestimmungseinrichtung zumindest solange unterbleibt, bis die bestimmte Weglänge eine vorgegebenen Mindestweglänge überschritten hat.

Beispielsweise ist die vorgegebene Mindestweglänge größer als 20 m und kleiner als 2000 m.

Insbesondere ist die vorgegebene Mindestweglänge kleiner als die geo-objekt-unabhängige Höchstweglänge und kleiner als die geo-objekt-abhängige Korrelationsweglänge jedes Geo-Objekts, das die Anwesenheit eines Fahrzeugs auf einer Straße repräsentiert.

Insbesondere kann die erfindungsgemäße Datenverarbeitungseinrichtung ausgebildet sein, Geschwindigkeitsmesswerte von der Positionsbestimmungseinrichtung zu empfangen oder anhand von durch die Positionsbestimmungseinrichtung bereitgestellten Daten, insbesondere aufeinander folgend bereitgestellten Standortpositionen oder Positionsdaten, zu bestimmen, Beschleunigungsmesswerte von einer Beschleunigungsmesseinrichtung zu empfangen, und wenigstens eine Weglänge, insbesondere die erste Weglänge, in Abhängigkeit von einem im Zusammenhang mit der ersten Standortposition empfangenen oder bestimmten ersten Geschwindigkeitsmesswert und wenigstens einem nachfolgend empfangenen Beschleunigungsmesswert zu bestimmen.

Vorteilhaft kann damit auf einen Anschluss der erfindungsgemäßen Datenverarbeitungseinrichtung an einen fahrzeugeigenen Weggeber und/ oder an ein fahrzeugeigenes Tachometer verzichtet werden, wodurch die Ausbildung einer vom Fahrzeug mitgeführten erfindungsgemäßen Datenverarbeitungseinrichtung vereinfacht wird. Insbesondere wird es damit möglich, die erfindungsgemäße Datenverarbeitungseinrichtung als Frontscheibengerät auszubilden, welches keine Kommunikationsverbindung zu dem Fahrzeug benötigt.

Beispielsweise ist wenigstens ein Geo-Objekt in Form eines Kreises, der definiert ist durch eine erste vorbestimmte Position und eine zweite vorbestimmte Position oder einen Radius, im ersten Datenspeicher gespeichert, wobei und die Datenverarbeitungseinrichtung ausgebildet ist, die räumliche Korrelation der ersten Standortposition mit einem solchen Geo-Objekte daran zu ermitteln, dass die erste Standortposition in dem Kreis liegt, der durch die erste geographische Position und die zweite geographische Position oder den Radius definiert wird.

Beispielsweise ist wenigstens ein Geo-Objekt in Form eines Polygons, das definiert ist durch eine erste vorbestimmte Position, eine zweite vorbestimmte Position und wenigstens eine dritte vorbestimmte Position, im ersten Datenspeicher gespeichert, wobei die Datenverarbeitungseinrichtung ausgebildet ist, die räumliche Korrelation der ersten Standortposition mit einem solchen Geo-Objekte daran zu ermitteln, dass die erste Standortposition in dem Polygon liegt, das durch die erste vorbestimmte Position, die zweite vorbestimmte Position und wenigstens die dritte vorbestimmte Position definiert wird.

Beispielsweise ist wenigstens ein Geo-Objekt in Form einer Linie, die definiert ist durch eine erste vorbestimmte Position und eine zweite vorbestimmte Position oder einen Vektor, im ersten Datenspeicher gespeichert, wobei die Datenverarbeitungseinrichtung ausgebildet ist, die räumliche Korrelation der ersten Standortposition mit einem solchen Geo-Objekte daran zu ermitteln, dass die erste Standortposition zusammen mit einer der erste Standortposition vorhergehend durch die Positionsbestimmungseinrichtung bereitgestellten Vorläufer-Standortposition eine Fahrspur bildet, die die Linie, die durch ein solches Geo-Objekt definiert wird, schneidet.

Prinzipiell kann die erfindungsgemäße Datenverarbeitungseinrichtung fahrzeuggebunden sein (z. B. indem sie von einem Fahrzeug mitgeführt wird), oder sie kann fahrzeugungebunden sein (z. B. indem sie abseits des Fahrzeugs beabstandet von dem Fahrzeug angeordnet ist. Im Ersten Fall kann man von einer erfindungsgemäßen dezentralen Datenverarbeitungseinrichtung sprechen, im zweiten Fall von einer erfindungsgemäßen zentralen Datenverarbeitungseinrichtung, die im Mobilfunkwege Standortpositionen oder Positionsdaten zur Bestimmung von Standortpositionen sowie Weglängen oder Messwerte zur Bestimmung der Weglängen von einer Fahrzeugeinrichtung empfängt, die zusätzlich zu der Positionsbestimmungseinrichtung und dem Messwertgeber eine Mobilfunk-Kommunikationseinrichtung zum Datenversand an die zentrale Datenverarbeitungseinrichtung umfasst. Eine solche erfindungsgemäße zentrale Datenverarbeitungseinrichtung bildet zusammen mit einer solchen Fahrzeügeinrichtung ein erfindungsgemäßes System.

Nachfolgend für das Beispiel einer Fahrzeugbindung einer erfindungsgemäßen dezentralen Datenverarbeitungseinrichtung vorgestellte Ausprägungen der Erfindung lassen sich analog auf den Fall der alternativen oder kumulativen Fahrzeuglösung einer erfindungsgemäßen zentralen Datenverarbeitungseinrichtung in einem System übertragen, in dem die erfindungsgemäße Datenverarbeitungseinrichtung nicht von einer Fahrzeugeinrichtung umfasst ist, sondern mobilfunktechnisch an eine Fahrzeugeinrichtung gekoppelt, die anstatt der erfindungsgemäßen dezentralen Datenverarbeitungseinrichtung eine Mobilfunk-Kommunikationseinrichtung zur Übertragung der von der erfindungsgemäßen zentralen Datenverarbeitungseinrichtung benötigten Daten aufweist:

Im Falle einer Fahrzeugbindung einer erfindungsgemäßen dezentralen Datenverarbeitungseinrichtung wird durch die Erfindung auch eine Fahrzeugeinrichtung mit wenigstens einer erfindungsgemäßen Datenverarbeitungseinrichtung bereitgestellt sowie wenigstens einer Positionsbestimmungseinrichtung, die von der Datenverarbeitungseinrichtung umfasst oder zumindest zeitweise kommunikationstechnisch an diese gekoppelt ist, und wenigstens einer Beschleunigungs-, Geschwindigkeits- und/ oder Weglängenmesseinrichtung, die von der Datenverarbeitungseinrichtung umfasst oder zumindest zeitweise kommunikationstechnisch an diese gekoppelt ist, wobei die Positionsbestimmungseinrichtung ausgebildet ist, Navigationssignale von Navigationssatelliten wenigstens eines Globalen Navigationssatellitensystems zu empfangen und anhand der empfangenen Navigationssignale die Standortpositionen zu erzeugen oder die Positionsdaten zu erzeugen, aus denen die Datenverarbeitungseinrichtung die Standortpositionen erzeugt, und die Datenverarbeitungseinrichtung.ausgebildet ist, von der Positionsbestimmungseinrichtung bereitgestellte Standortpositionen zu empfangen oder aus von dieser Positionsbestimmungseinrichtung bereitgestellten Positionsdaten zu erzeugen, aus diesen Standortpositionen anhand der Feststellung einer Positionsbestimmungsunterbrechungsphase die erste Standortposition zu bestimmen, von der Beschleunigungs-, Geschwindigkeits- und/ oder Weglängenmesseinrichtung Beschleunigungs-, Geschwindigkeits- und/ oder Weglängenmesswerte zu empfangen und anhand von wenigstens einem der empfangenen Messwerte die erste Weglänge zu bestimmen.

Eine solche Fahrzeugeinrichtung kann dadurch gekennzeichnet sein, dass die Positionsbestimmungseinrichtung ausgebildet ist, im Falle dessen, dass sie keine Navigationssignale empfängt oder anhand der empfangenen Navigationssignale keine Standortposition oder Positionsdaten bestimmen kann, eine Information über eine mangelnde Positionsbestimmung generiert und diese Information der Datenverarbeitungseinrichtung bereitstellt, und die Datenverarbeitungseinrichtung ausgebildet ist, die Information über eine mangelnde Positionsbestimmung von der Positionsbestimmungseinrichtung zu erfassen und das gänzliche Unterbleiben der Bereitstellung wenigstens einer der ersten Standortposition zeitlich nachfolgenden zweiten Standortposition durch die Positionsbestimmungseinrichtung daran festzustellen, dass sie eine Information oder eine bestimmte Anzahl an Informationen über eine mangelnde Positionsbestimmung von der Positionsbestimmungseinrichtung erfasst hat.

Ferner kann eine solche Fahrzeugeinrichtung dadurch gekennzeichnet sein, dass die Positionsbestimmungseinrichtung ausgebildet ist, der Datenverarbeitungseinrichtung Standortpositionen oder Positionsdatensätze zusammen mit einer Information über die Güte der jeweiligen Standortposition oder des jeweiligen Positionsdatensatzes bereitzustellen, und die Datenverarbeitungseinrichtung ausgebildet ist, die Information über die Güte der jeweiligen Standortposition oder des jeweiligen Positionsdatensatzes zusammen mit der jeweiligen Standortposition oder dem jeweiligen Positionsdatensatz zu empfangen, und das Vorliegen einer Positionsbestimmungsunterbrechungsphase daran festzustellen, dass von den über die erste Standortpositionen oder des zur Erzeugung der ersten Standortposition dienlichen Positionsdatensatzes hinaus bereitgestellten weiteren Standortpositionen oder Positionsdatensätzen eine bestimmte Anzahl.nicht die Güte der vorgegebenen Mindestgüte erreicht.

Außerdem kann eine solche Fahrzeugeinrichtung wenigstens eine erste Kommunikationseinrichtung aufweisen und in einem Zustand gegebener Betriebsbereitschaft ausgebildet sein, keine mangelnde Betriebsbereitschaft und/ oder eine gegebene Betriebsbereitschaft zu signalisieren, von der Positionsbestimmungseinrichtung empfangene oder aus von der Positionsbestimmungseinrichtung empfangenen Positionsdaten erzeugte Standortpositionen in einer Trajektoriendatei zu speichern, die den Verlauf eines von dem Fahrzeug zurückgelegten Weges repräsentiert, eine Vollständigkeit diese Trajektoriendatei zu überwachen, die Trajektoriendatei, wenn sie vollständig ist, mittels der ersten Kommunikationseinrichtung an eine außerhalb und beabstandet vom Fahrzeug angeordneten zentrale Datenverarbeitungseinrichtung zu versenden, die Anzahl von erzeugten Fehlersignalen zu zählen und bei Erreichen oder Überschreiten einer vorgegebenen Maximalanzahl von erzeugten Fehlersignalen in einen Zustand der mangelnden Betriebsbereitschaft zu wechseln, wobei die Fahrzeugeinrichtung im Zustand mangelnder Betriebsbereitschaft ausgebildet ist, eine mangelnde Betriebsbereitschaft und/ oder keine gegebene Betriebsbereitschaft zu signalisieren und die im Zustand gegebener Betriebsbereitschaft zuletzt gespeicherte Trajektoriendatei, die die zuletzt gespeicherte erste Standortposition umfasst, unabhängig von ihrer Vollständigkeit mittels der ersten Kommunikationseinrichtung an die zentrale Datenverarbeitungseinrichtung zu versenden.

Schließlich kann eine solche Fahrzeugeinrichtung von einem System mit wenigstens einer außerhalb und beabstandet vom Fahrzeug angeordneten zentralen Datenverarbeitungseinrichtung umfasst sein, wobei die Fahrzeugeinrichtung wenigstens eine erste Kommunikationseinrichtung aufweist und ausgebildet ist, erste Standortpositionen in einem Datenspeicher der Fahrzeugeinrichtung zu speichern, und ausgelöst durch das Fehlersignal eine Fehlernachricht mittels der ersten Kommunikationseinrichtung an die zentrale Datenverarbeitungseinrichtung zu versenden, die zentrale Datenverarbeitungseinrichtung ausgebildet ist, Fehlernachrichten von Fahrzeugeinrichtungen zu empfangen, von jeweils einer Fahrzeugeinrichtung eingegangene Fehlernachrichten zu zählen und bei Erreichen oder Überschreiten einer vorgegebenen Maximalanzahl an von der Fahrzeugeinrichtung eingegangen Fehlersignalen eine Aufforderungsnachricht an diese Fahrzeugeinrichtung zu versenden, und die Fahrzeugeinrichtung ausgebildet ist, die gesendete Aufforderungsnachricht mittels der ersten Kommunikationseinrichtung zu empfangen und in Antwort auf die Aufforderungsnachricht wenigstens eine erste Standortposition, insbesondere die zuletzt gespeicherte, mittels der ersten Kommunikationseinrichtung an die zentrale Datenverarbeitungseinrichtung zu versenden.

Gemäß einem zweiten Aspekt der Erfindung wird System mit wenigstens einer von einem Fahrzeug mitgeführten Fahrzeugeinrichtung und wenigstens einer abseits und beabstandet von dem Fahrzeug angeordneten, nicht von dem Fahrzeug mitgeführten zentralen Datenverarbeitungseinrichtung, bereitgestellt, wobei die Fahrzeugeinrichtung wenigstens eine Positionsbestimmungseinrichtung, wenigstens eine dezentrale Datenverarbeitungseinrichtung, wenigstens eine Beschleunigungs-, Geschwindigkeits- und/ oder Weglängenmesseinrichtung und wenigstens eine erste Kommunikationseinrichtung aufweist und wobei die dezentrale Datenverarbeitungseinrichtung ausgebildet ist, wenigstens eine erste Standortposition, die einen Standort der von dem Fahrzeug mitgeführten Positionsbestimmungseinrichtung repräsentiert, von dieser Positionsbestimmungseinrichtung zu empfangen oder aus Positionsdaten zu erzeugen, die sie von dieser Positionsbestimmungseinrichtung empfangen hat, und eine erste Weglänge, die ausgehend von der ersten Standortposition von dem Fahrzeug zurückgelegt wurde, zu empfangen, wenn diese erste Weglänge zuvor aus wenigstens einem Beschleunigungs-, Geschwindigkeits- und/ oder Weglängenmesswert der Beschleunigungs-, Geschwindigkeits- und/ oder Weglängenmesseinrichtung bestimmt wurde, oder diese erste Weglänge aus wenigstens einem von der Beschleunigungs-, Geschwindigkeits- und/ oder Weglängenmesseinrichtung empfangenen Beschleunigungs-, Geschwindigkeits- und/ oder Weglängenmesswert zu bestimmen, wobei die dezentrale Datenverarbeitungseinrichtung ferner ausgebildet ist, das Vorliegen einer Positionsbestimmungsunterbrechungsphase daran festzustellen, dass die Bereitstellung wenigstens einer, der ersten Standortposition zeitlich nachfolgenden, zweiten Standortposition von einer vorgegebenen Mindestgüte, gänzlich oder von zu deren Erzeugung dienlichen Positionsdaten durch die Positionsbestimmungseinrichtung unterbleibt und im Falle der Feststellung des Vorliegens einer Positionsbestimmungsunterbrechungsphase wenigstens die erste Standortposition mittels der ersten Kommunikationseinrichtung an die zentrale Datenverarbeitungseinrichtung zu senden, wobei die zentrale Datenverarbeitungseinrichtung wenigstens einen ersten Datenspeicher aufweist oder zumindest zeitweise kommunikationstechnisch an einen solchen gekoppelt ist, in dem wenigstens ein, durch wenigstens eine vorbestimmte Position gekennzeichnetes, Geo-Objekt gespeichert ist, und ausgebildet ist, zu ermitteln, ob die erste Standortposition räumlich mit wenigstens einem gespeicherten Geo-Objekte korreliert, und, falls sie eine räumliche Korrelation der ersten Standortposition mit wenigstens einem gespeicherten Geo-Objekt ermitteln konnte, eine Korrelationsnachricht zusammen mit einer geo-objekt-abhängigen Korrelationsweglänge, die von ermittelten korrelierenden Geo-Objekt abhängt, das mit der ersten Standortposition räumlich korreliert, an die Fahrzeugeinrichtung zu senden, und die dezentrale Datenverarbeitungseinrichtung ausgebildet ist, die Korrelationsnachricht zusammen mit der geo-objekt-abhängigen Korrelationsweglänge von der zentralen Datenverarbeitungseinrichtung zu empfangen, im Falle des Empfangs einer geoobjekt-abhängigen Korrelationsweglänge ein Fehlersignal zu erzeugen, wenn die erste Weglänge größer ist als die empfangene geo-objekt-abhängige Korrelationsweglänge und im Falle keines Empfangs einer geo-objekt-abhängigen Korrelationsweglänge ein Fehlersignal zu erzeugen, wenn die erste Weglänge größer ist als eine geo-objekt-unabhängige Höchstweglänge.

Es versteht sich, dass die zentrale Datenverarbeitungseinrichtung dieses zweiten Aspekts der Erfindung insoweit Merkmale der Datenverarbeitungseinrichtung des ersten Aspekts der Erfindung aufweisen kann, wie derartige Merkmale logischerweise nicht stattdessen der Fahrzeugeinrichtung dieses zweiten Aspekts der Erfindung zuzuordnen wären. Genauso versteht es sich, dass Fahrzeugeinrichtung dieses zweiten Aspekts der Erfindung insoweit Merkmale der Datenverarbeitungseinrichtung des ersten Aspekts der Erfindung aufweisen kann, wie derartige Merkmale logischerweise nicht stattdessen der zentralen Datenverarbeitungseinrichtung dieses zweiten Aspekts der Erfindung zuzuordnen wären.

Gemäß eines dritten Aspekts der Erfindung wird ein Verfahren zur Prüfung der Erfüllung der bestimmungsgemäßen Funktion einer von einem Fahrzeug mitgeführten Positionsbestimmungseinrichtung mit folgenden Schritten bereitgestellt: (a) Empfang wenigstens einer von der Positionsbestimmungseinrichtung bereitgestellten ersten Standortposition, die einen Standort einer von einem Fahrzeug mitgeführten Positionsbestimmungseinrichtung repräsentiert, oder Erzeugung derselben aus von der Positionsbestimmungseinrichtung bereitgestellten Positionsdaten, (b) Empfang wenigstens eines Beschleunigungs-, Geschwindigkeits- und/ oder Weglängenmesswertes von wenigstens einer, von dem Fahrzeug mitgeführten, Beschleunigungs-, Geschwindigkeits- und/ oder Weglängenmesseinrichtung, welches gekennzeichnet ist durch (c) die Bereitstellung wenigstens eines, durch wenigstens eine vorbestimmte Position gekennzeichneten, Geo-Objektes durch einen Speicher, (d) die Bestimmung einer ersten Weglänge, die ausgehend von der ersten Standortposition von dem Fahrzeug zurückgelegt wurde, aus dem wenigstens einem empfangenen Beschleunigungs-, Geschwindigkeits- und/ oder Weglängenmesswert, (e) die Feststellung des Vorliegens eine Positionsbestimmungsunterbrechungsphase daran, dass die Bereitstellung wenigstens einer, der ersten Standortposition zeitlich nachfolgenden, zweiten Standortposition von einer vorgegebenen Mindestgüte, gänzlich oder von zu deren Erzeugung dienlichen Positionsdaten durch die Positionsbestimmungseinrichtung unterbleibt, (f) die Ermittlung, ob die erste Standortposition räumlich mit wenigstens einem Geo-Objekt korreliert, und (g) der Erzeugung eines Fehlersignals, wenn (i) eine räumliche Korrelation der ersten Standortposition mit wenigstens einem Geo-Objekt ermittelt werden konnte und die erste Weglänge größer ist als eine vorgegebene geo-objekt-abhängige Korrelationsweglänge, die mit einem ermittelten Geo-Objekt verknüpft ist, oder wenn (ii) wenn keine räumliche Korrelation der ersten Standortposition mit wenigstens einem Geo-Objekt ermittelt werden konnte und die erste Weglänge größer ist als eine vorgegebene geoobjekt-unabhängige Höchstweglänge.

Weitere-Ausprägungen des erfindungsgemäßen Verfahrens können den Merkmalen der erfindungsgemäßen Datenverarbeitungseinrichtung gemäß vorgesehen sein.

Insbesondere werden durch den Speicher mehrere Geo-Objekte bereitgestellt, die jeweils durch wenigstens eine vorbestimmte Position gekennzeichnet sind.

Insbesondere wird die erste Weglänge innerhalb der Positionsbestimmungsunterbrechungsphase bestimmt, während der die Bereitstellung wenigstens der einer ersten Standortposition zeitlich nachfolgenden zweiten Standortposition von einer vorgegebenen Mindestgüte, gänzlich oder von zu deren Erzeugung dienlichen Positionsdaten durch die Positionsbestimmungseinrichtung unterbleibt.

Insbesondere wird so oft eine erste Weglänge innerhalb der Positionsbestimmungsunterbrechungsphase bestimmt, während der die Bereitstellung wenigstens einer, der ersten Standortposition zeitlich nachfolgenden, zweiten Standortposition von einer vorgegebenen Mindestgüte, gänzlich oder von zu deren Erzeugung dienlichen Positionsdaten durch die Positionsbestimmungseinrichtung unterbleibt, und mit der geo-objekt-abhängigen Korrelationsweglänge beziehungsweise der vorgegebenen geo-objekt-unabhängigen Höchstweglänge verglichen, bis eine bestimmte erste Weglänge größer ist als die geo-objekt-abhängige Korrelationsweglänge beziehungsweise die vorgegebene geo-objektunabhängige Höchstweglänge oder eine die Bereitstellung einer, der ersten Standortposition zeitlich nachfolgenden, zweiten Standortposition von einer vorgegebenen Mindestgüte oder von zu deren Erzeugung dienlichen Positionsdaten durch die Positionsbestimmungseinrichtung erfolgt.

Nachfolgend wird die Erfindung anhand dreier nicht als einschränkend anzusehender Ausführungsbeispiele näher beschrieben. Dazu zeigen schematisch

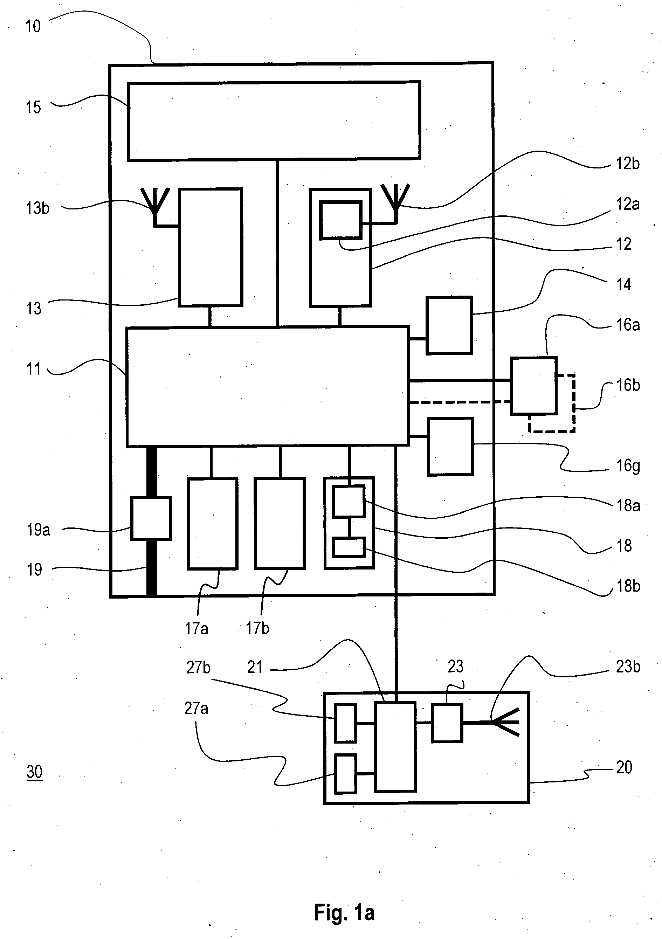

Fig. 1a     sowohl eine erste Variante einer erfindungsgemäßen Fahrzeugeinrichtung mit einer dezentralen erfindungsgemäßen Datenverarbeitungseinrichtung gemäß einem ersten Ausführungsbeispiel als auch eine erste Variante einer erfindungsgemäßen Fahrzeugeinrichtung gemäß einem zweiten und einem dritten Ausführungsbeispiel,

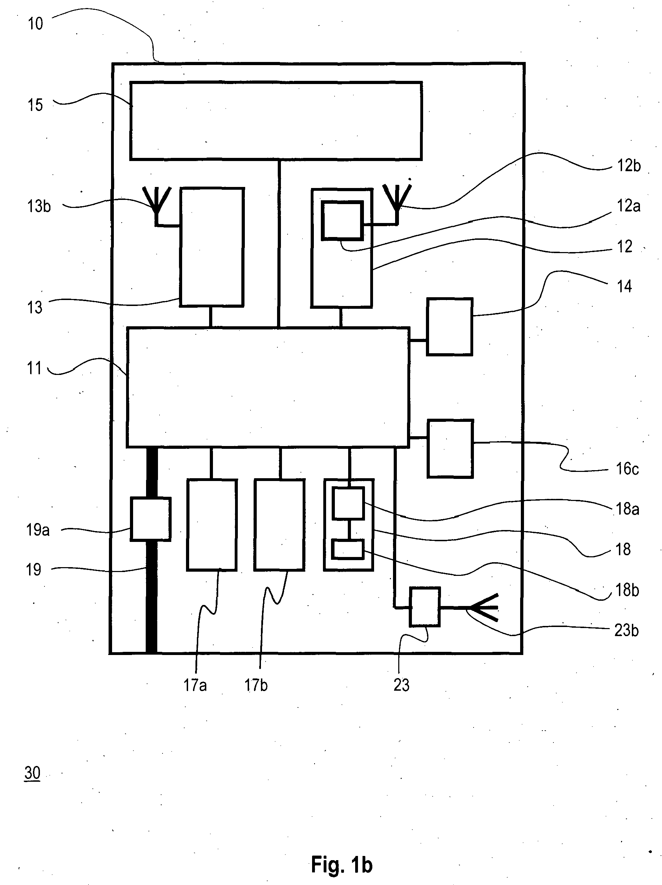

Fig. 1b     sowohl eine zweite Variante einer erfindungsgemäßen Fahrzeugeinrichtung mit einer dezentralen erfindungsgemäßen Datenverarbeitungseinrichtung gemäß dem ersten Ausführungsbeispiel als auch eine zweite Variante einer Fahrzeugeinrichtung gemäß dem zweiten und dem dritten Ausführungsbeispiel,

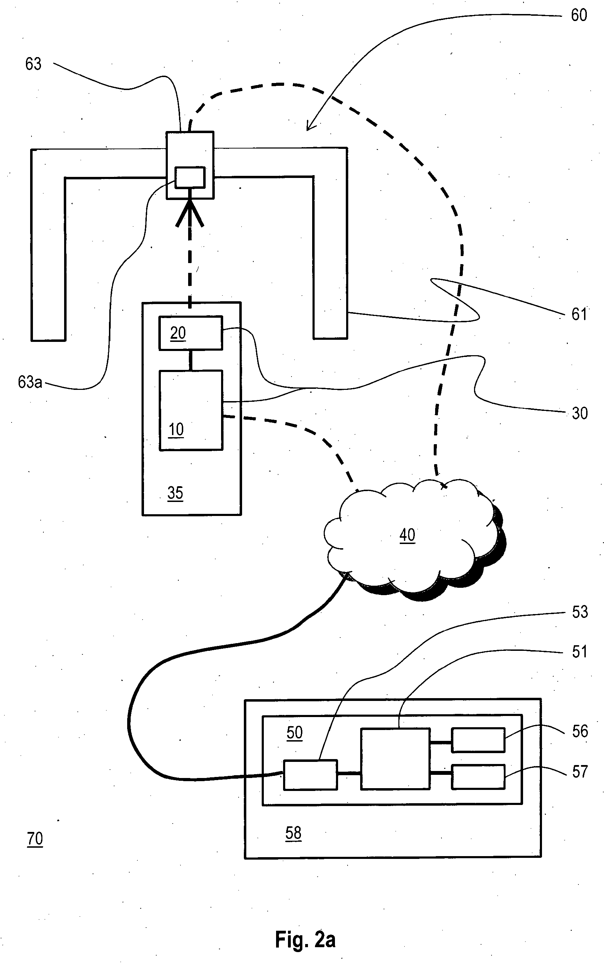

Fig. 2a     sowohl ein System mit der ersten Variante der erfindungsgemäßen Fahrzeugeinrichtung mit der dezentralen erfindungsgemäßen Datenverarbeitungseinrichtung gemäß dem ersten Ausführungsbeispiel als auch ein System einer zentralen erfindungsgemäßen Datenverarbeitungseinrichtung gemäß dem zweiten Ausführungsbeispiel als auch ein erfindungsgemäßes System gemäß dem dritten Ausführungsbeispiel mit jeweils der ersten Variante der erfindungsgemäßen Fahrzeugeinrichtung,

Fig. 2a     sowohl ein System mit der zweiten Variante der erfindungsgemäßen Fahrzeugeinrichtung mit der dezentralen erfindungsgemäßen Datenverarbeitungseinrichtung gemäß dem ersten Ausführungsbeispiel als auch ein System einer zentralen erfindungsgemäßen Datenverarbeitungseinrichtung gemäß dem zweiten Ausführungsbeispiel als auch ein erfindungsgemäßes System gemäß dem dritten Ausführungsbeispiel mit jeweils der zweiten Variante der erfindungsgemäßen Fahrzeugeinrichtung,

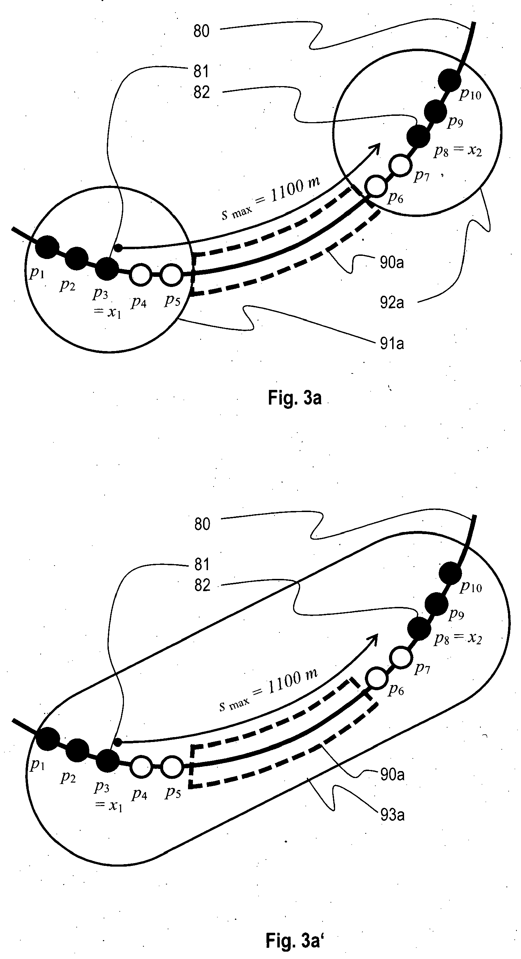

Fig. 3a    eine Reihe von Standortpositionen eines ersten zurückgelegten Weges, denen gemäß dem ersten Ausführungsbeispiel ein erstes Geo-Objekt und ein zweites Geo-Objekt zugeordnet sind, und

Fig. 3a'   eine Reihe von Standortpositionen des ersten zurückgelegten Weges, denen gemäß dem ersten Ausführungsbeispiel ein gemeinsames Geo-Objekt zugeordnet ist,

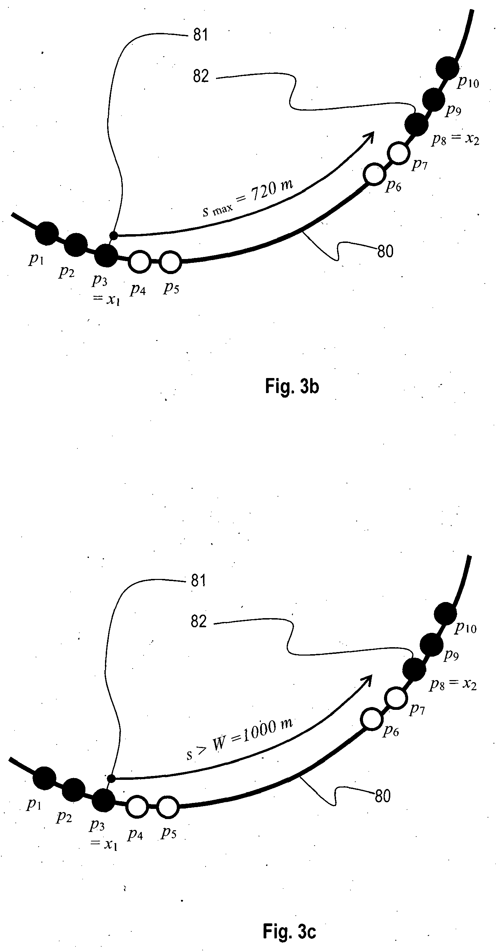

Fig. 3b    eine Reihe von Standortpositionen eines zweiten zurückgelegten Weges, denen gemäß dem ersten Ausführungsbeispiel kein Geo-Objekt zugeordnet ist,

Fig. 3c    eine Reihe von Standortpositionen eines dritten zurückgelegten Weges, denen gemäß dem ersten Ausführungsbeispiel kein Geo-Objekt zugeordnet ist,

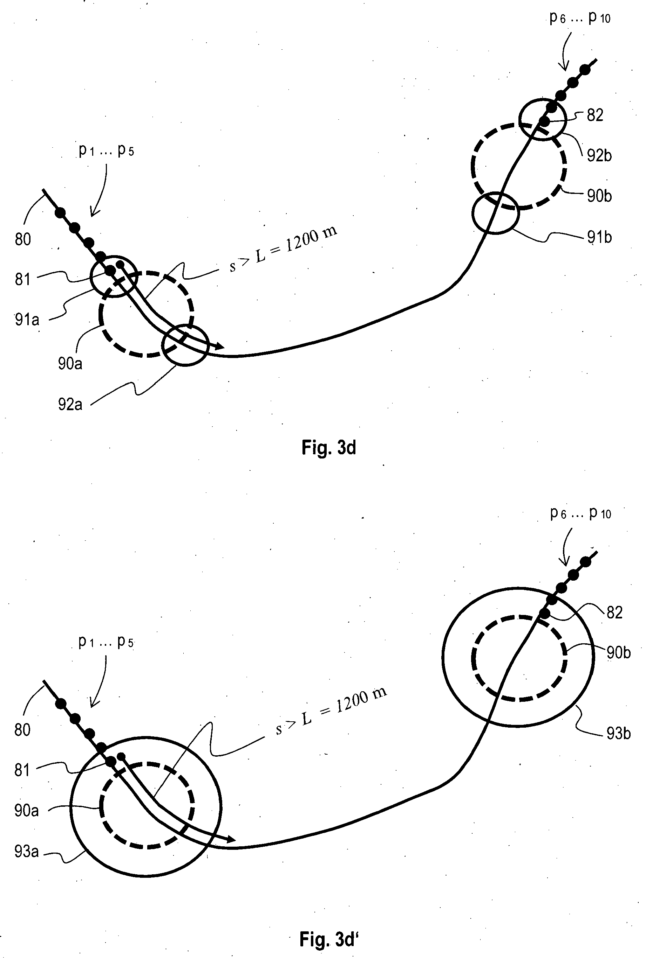

Fig. 3d    eine Reihe von Standortpositionen eines vierten zurückgelegten Weges durch zwei Tunnel, die gemäß dem ersten Ausführungsbeispiel durch ein erstes Partner-Geo-Objekt und ein zweites Partner-Geo-Objekt verschiedener Geo-Objekt-Gruppen repräsentiert sind,

Fig. 3d'   eine Reihe von.Standortposifionen eines vierten zurückgelegten Weges durch zwei Tunnel, die gemäß dem ersten Ausführungsbeispiel durch ein erstes Solitär-Geo-Objekt und ein zweites Solitär-Geo-Objekt repräsentiert sind,

Fig. 4a    eine Reihe von Standortpositionen eines zurückgelegten Weges durch einen Tunnel, denen gemäß dem zweiten Ausführungsbeispiel und dem dritten Ausführungsbeispiel ein erstes Geo-Objekt und ein zweites Geo-Objekt zugeordnet ist, und

Fig. 4b    eine Reihe von Standortpositionen eines zurückgelegten Weges, dem kein Geo-Objekt zugeordnet ist.

Gleiche oder gleich wirkende Komponenten verschiedener Figuren sind mit denselben Bezugszeichen versehen.

Fig. 1a zeigt schematisch eine vom Aufbau, jedoch nicht von der Ausbildung, her die im ersten, zweiten und dritten Ausführungsbeispiel identische Ausführungsform einer ersten Variante einer Fahrzeugeinrichtung 30 vom selbstverortenden Typ, die im ersten.Ausführungsbeispiel eine dezentrale Variante der erfindungsgemäßen Datenverarbeitungseinrichtung bildet, im zweiten Ausführungsbeispiel die erfindungsgemäße Positionsbestimmungseinrichtung und im dritten Ausführungsbeispiel die Fahrzeugeinrichtung des erfindungsgemäßen Systems. Die Fahrzeugeinrichtung 30 umfasst ein Fahrzeuggerät 10 mit einem Fahrzeuggerät-Prozessor 11 sowie ein DSRC-Kommunikationsmodul 20 zur DSRC-Kommunikation (DSRC = dedicated short range communication), das mit dem Fahrzeuggerät 10 datentechnisch gekoppelt ist. Zudem umfasst die Fahrzeugeinrichtung 30 außerdem einen Weggeber 16a (beispielsweise ein Kilometerzähler, ein Hodometer, ein Weglängenmesser oder ein Wegstreckenzähler), der ebenfalls datentechnisch mit dem Fahrzeuggerät 10 gekoppelt ist und in seiner Funktion als Weglängenmesseinrichtung wiederholt Weglängenmesswerte in Form von in vorgegebenen Zeitintervallen zurückgelegten Längendifferenzen $\Delta s_i$ an den Fahrzeuggerät-Prozessor 11 abgibt. Anstelle des Weggebers 16a kann auch ein Tachometer 16b (in Fig. 1a gestrichelt dargestellt) vorgesehen sein, das Impulssignale (sogenannte "wheel ticks") an den Fahrzeuggerät-Prozessor 11 abgibt, der die Frequenzen (inverse Zeitabstände) der Signale mit einem Kalibrierfaktor (sogenannte "wheel tick rate") multipliziert und damit zu Geschwindigkeitsmesswerten gelangt, aus denen zeitintervallweise die zurückgelegten Weglängen bestimmt werden können. Datentechnische Kopplungen zwischen datentechnisch miteinander gekoppelten Komponenten sind in Fig. 1a durch Verbindungsstriche zwischen den gekoppelten Komponenten verdeutlicht. Sie können durch Schnittstellen, Verbindungsleitungen oder Drahtlos-Kommunikationsmittel (z. B. bluetooth) realisiert sein. Der Fahrzeuggerät-Prozessor 11 ist durch die Ausführung eines Computerprogramms, das zur Ausführung aus dem Daten-Schreib-Lese-Speicher 17a in den Arbeitsspeicher 17b geladen wird, ausgebildet, Daten an den DSRC-Kommunikationsmodul-Prozessor 21 des DSRC-Kommunikationsmoduls 20 zu senden und von ihm Daten zu empfangen. Entsprechend ist der DSRC-Kommunikationsmodul-Prozessor 21 durch die Ausführung eines im DSRC-Kommunikationsmodul-Daten-Schreib-Lese-Speicher 27a gespeicherten Computerprogramms ausgebildet, Daten von dem Fahrzeuggerät-Prozessor 11 zu empfangen und an diesen zu senden.

Ein GNSS-Positionsbestimmungsmodul 12 empfängt mittels seiner GNSS-Empfangsantenne 12b Signale von nicht dargestellten Satelliten eines Globalen Navigationssatellitensystems (GNSS), beispielsweise GPS, und ermittelt aus den empfangenen Satellitensignalen mittels ihres GNSS-Empfängers 12a seine GNSS-Position - und damit die GNSS-Position eines Fahrzeugs (nur dargestellt bezüglich des zweiten Ausführungsbeispiels mit Bezugszeichen 35 in Fig. 2a), von dem die Fahrzeugeinrichtung 30 mitgeführt wird.

Die durch das GNSS-Positionsbestimmungsmodul 12 ermittelte GNSS-Position wird dem Fahrzeuggerät-Prozessor 11 bereitgestellt und bildet entweder bereits die erfindungsgemäße Standortposition oder eine vorläufige Position, die durch den Fahrzeuggerät-Prozessor 11 anhand von Fahrtrichtungsänderungswerten, die von einem Gyroskop 16g des Fahrzeuggerätes bereitgestellt werden, und anhand von relativen Weglängenwerten eines in einem bestimmten Zeitrahmen zurückgelegten Weges, die von dem Weggeber 16a bereitgestellt werden, im Zuge eines als Koppelortung an sich bekannten Verfahrens weiter zu einer gegenüber der GNSS-Position genaueren Koppelortungsposition verarbeitet werden, die schließlich als erfindungsgemäße Standortposition gilt.

Alternativ dazu können die Signale des Gyroskops 16g und des Weggebers 16a anstatt auf den Prozessor 11 auf das GNSS-Positionsbestimmungsmodul 12 geleitet werden, wobei das GNSS-Positionsbestimmungsmodul 12 die Koppelortung durchführt und die aus der Koppelortung resultierende Koppelortungsposition als erfindungsgemäße Standortposition dem Fahrzeuggerät-Prozessor 11 bereitstellt. Diese Alternative ist nicht in Fig. 1a dargestellt.

Im Falle der Koppelortung gilt- unabhängig davon, ob die Koppelortung durch den Fahrzeuggerät-Prozessor 11 oder das GNSS-Positionsbestimmungsmodul 12 durchgeführt wird - die Koppelortungsposition als Standortposition.

Im weiteren Verlauf wird in Bezug auf beide Ausführungsbeispiele stellvertretend für beide Möglichkeiten der Standortpositionsbestimmung mit oder ohne Koppelortung nur noch davon gesprochen, dass das GNSS-Positionsbestimmungsmodul 12 die Standortposition in Form der GNSS-Position bereitstellt.

Die Bestimmung von Standortpositionen durch das GNSS-Positionsbestimmungsmodul 12 (und damit auch durch die das Fahrzeuggerät 10 und durch die Fahrzeugeinrichtung 30) erfolgt wiederholt - beispielsweise im Sekundentakt - insbesondere im Laufe der Fortbewegung des Fahrzeugs 35.

Der Fahrzeuggerät-Prozessor 11 ist an einen Mobilfunk-Sendeempfänger 13 gekoppelt, der eine Sendeempfangsantenne 13b zum Versenden und Empfangen von Nachrichten in Form von Funksignalen aufweist. Mittels dieses Mobilfunk-Sendeempfängers 13 ist es dem Fahrzeuggerät 10 gemäß dem ersten Ausführungsbeispiel (dezentrale Fehlfunktionsermittlung) möglich - ohne dass dies nötig wäre - , Fehlersignale, die die mangelnde Betriebsfähigkeit der Fahrzeugeinrichtung 30, insbesondere ihres Positionsbestimmungsmoduls 12, dokumentieren, an eine zentrale Datenverarbeitungsanlage (nicht dargestellt) zu versenden.

Im Falle des zweiten Ausführungsbeispiels (zentrale Fehlfunktionsermittlung) wird es dem Fahrzeuggerät 10 mit dem Mobilfunk-Sendeempfänger 13 möglich, Daten der durch das Positionsbestimmungsmodul 12 ermittelten Standortpositionen an die zentrale Datenverarbeitungseinrichtung 50 einer Mautzentrale 58 (dargestellt in Fig. 2a) zu versenden.

Ebenso im dritten Ausführungsbeispiel, in dem die Fehlfunktionsermittlung wiederum dezentral im Fahrzeuggerät 10 erfolgt.

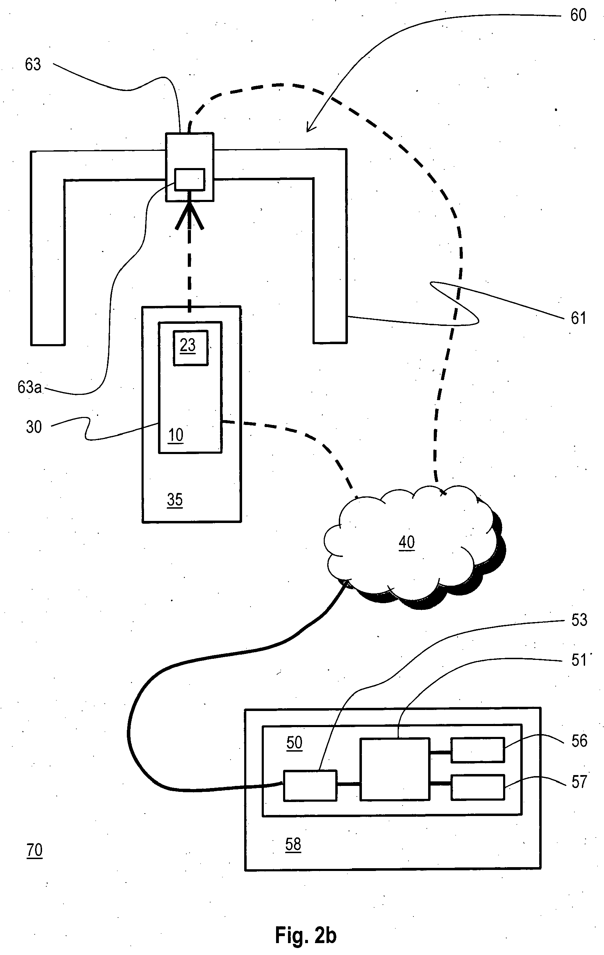

Mittels des DSRC-Kommunikationsmoduls 20 ist es dem Fahrzeuggerät 10 gemäß dem ersten Ausführungsbeispiel und dritten Ausführungsbeispiel (dezentrale Fehlfunktionsermittlung) möglich - ohne dass dies nötig wäre - , Fehlersignale, die die mangelnde Betriebsfähigkeit der Fahrzeugeinrichtung 30, insbesondere ihres Positionsbestimmungsmoduls 12, dokumentieren, an eine straßenseitige DSRC-Kommunikationseinrichtung 63a eines Kontrollgeräts 63 einer straßenseitigen Kontrolleinrichtung 60 zu senden, welche die Fehlersignale beispielsweise über das Mobilfunknetz 40 an die zentrale Datenverarbeitungseinrichtung 50 (dargestellt in Fig. 2a und Fig. 2b) weiterleitet.

Im Falle des dritten Ausführungsbeispiels (dezentrale Fehlfunktionsermittlung bei zentraler Korrelationsprüfung) wird es dem Fahrzeuggerät 10 mit dem DSRC-Kommunikationsmodul 20 möglich, Daten der durch das Positionsbestimmungsmodul 12 ermittelten ersten Standortposition an eine straßenseitige DSRC-Kommunikationseinrichtung 63a eines an einer Kontrollbrücke 61 befestigten Kontrollgeräts 63 zu senden, welches die ermittelten erste Standortposition auf Korrelation mit einem Geoobjekt prüft.

Das DSRC-Kommunikationsmodul 20 ist beabstandet von dem Fahrzeuggerät 10 derart an der Innenseite der Frontscheibe des Fahrzeugs 35 so befestigt, dass der DSRC-Sendeempfänger 23 mittels seiner DSRC-Sende- und Empfangsmittel 23b mit einer außerhalb des Fahrzeugs 35 angeordneten straßenseitigen DSRC-Kommunikationseinrichtung 63a eines Kontrollgerätes 63 einer straßenseitigen Einrichtung 60 einer kommunizieren kann. Ein DSRC-Kommunikationsträger ist Mikrowelle im Frequenzbereich von 5,8 GHz. Alternativ oder kumulativ ist als DSRC-Kommunikationsträger Infrarotlicht (z. B. 850 nm) möglich. Insbesondere kann das DSRC-Sende- und Empfangsmittel 23b mehrteilig ausgebildet sein und ein Sendemittel (Sendeantenne im Falle von Mikrowellen-DSRC-Kommunikation, IR-Leuchtdiode (IR-LED) im Falle einer Infrarot-DSRC-Kommunikation) und ein Empfangsmittel (Empfangsantenne im Falle von Mikrowellen-DSRC-Kommunikation, IR-Photodiode (IR-PD) im Falle einer Infrarot-DSRC-Kommunikation) umfassen. Im ersten Ausführungsbeispiel der dezentralen Fehlfunktionsermittlung kann die Fahrzeugeinrichtung 30 auch darauf beschränkt sein, das Fehlersignal dezentral, z. B. auf dem Fahrzeuggerät 10 zu erzeugen und wiederzugeben. Weder ein Mobilfunk-Sendeempfänger 13 noch ein DSRC-Kommunikationsmodul 20 müssen dazu in der Fahrzeugeinrichtüng vorhanden sein.

Im zweiten Ausführungsbeispiel der zentralen Fehlfunktionsermittlung ist es nötig, dass die Fahrzeugeinrichtung wenigstens den Mobilfunk-Sendeempfänger 13 umfasst, um erste und zweite Standortpositionen sowie zwischenzeitlich bestimmte zurückgelegte Weglängen ab der ersten Standortposition an die zentrale Datenverarbeitungseinrichtung 50 (siehe Fig. 2a und Fig. 2b) zu senden.

Der Fahrzeuggerät-Prozessor 11 ist an ein optional von dem Fahrzeuggerät 10 umfasstes Sicherheitsmodul 18 gekoppelt, dessen strichlinierte Umrissdarstellung seinen optionalen, d. h. nicht zwingenden, Charakter verdeutlicht und das als eigenständige Datenverarbeitungseinheit (beispielsweise als eine sogenannte Chipkarte) ausgebildet ist, die wenigstens ein autonomes Steuermodul 18a und einen Speicherbereich 18b aufweist, wobei das autonome Steuermodul 18a dazu konfiguriert ist, Anfragen nach einer Herausgabe von Daten aus dem Speicherbereich 18b und/ oder der Änderung oder Aufnahme von Daten im Speicherbereich 18b nur gegen eine Authentifizierung auszuführen. Die Durchführung der Authentifizierungsprözedur kann durch die Analyse einer digitalen Signatur mittels eines vom Signierenden im Speicherbereich 18b des Sicherheitsmoduls 18 abgelegten öffentlichen Schlüssels erfolgen.

Anstelle des Sicherheitsmoduls 18 kann ein kryptographischer Datenspeicher (nicht dargestellt) vorgesehen sein, in den der Prozessor 11 Daten nur mit entsprechender Authentifizierung verschlüsselt ablegen kann und entschlüsselnd auslesen kann.

Beispielsweise kann eine Nutzerkennung (z. B. eine Kundennummer des Fahrers), eine Fahrzeugeinrichtungskennung (eine Seriennummer des Fahrzeuggeräts 10 oder eine Mobilfunknummer eines Mobilfunk-Sendeempfängers 13) der Fahrzeugeinrichtung 30, eine Fahrzeugkennung des Fahrzeugs 35, eine Gewichtsklasse (oder: zulässiges Gesamtgewicht), eine Achsklasse (oder: Achszahl) und/ oder eine Schadstoffklasse in dem Speicherbereich 18b des Sicherheitsmoduls 18 gespeichert sein.

Alternativ oder optional kann die diese Kennungen und Klassen in dem Daten-Schreib-Lese-Speicher 17a gespeichert sein.

Die Kennungen dienen zur Identifizierung des Absenders von Nachrichten, die in der zentralen Datenverarbeitungseinrichtung 50 von der Fahrzeugeinrichtung 30 empfangen werden. Die Fahrzeugdaten der Gewichtsklasse, Achsklasse und Schadstoffklasse sind Parameter, die in die Berechnung der Höhe einer Maut einfließen, die für einen befahrenen Streckenabschnitt erhoben wird, mit dem zumindest eine der Standortpositionen räumlich korreliert. Die entsprechende Prüfung auf räumliche Korrelation kann in an sich bekannter Weise im Falle der dezentralen Mauterhebung durch den Prozessor 11 des Fahrzeuggeräts 10 und/ oder im Falle der zentralen Mauterhebung nach Übertragung der Standortpositionen an die zentrale Datenverarbeitungseinrichtung 50 durch den zentralen Prozessor 51 der zentralen Datenverarbeitungseinrichtung anhand von Vergleichen der Standortpositionen mit in dem Daten-Schreib-Lese-Speicher 17a beziehungsweise in dem ersten zentralen Datenspeicher 56 gespeicherten, durch wenigstens eine vorbestimmte Position gekennzeichneten, Geo-Objekten erfolgen, die mit jeweils einem mautpflichtigen Streckenabschnitt (konkret: dessen Länge oder Grundgebühr) verknüpft sind.

Das Fahrzeuggerät 10 weist zur Stromversorgung eine Batterie 19a, insbesondere ein wiederaufladbare Batterie (z. B: ein Akkumulator) auf, sowie einen Stromanschluss 19, über den sowohl das Fahrzeuggerät 10 alternativ zur Batterie 19a mit Strom des Fahrzeug-Bordnetzes versorgt werden kann. Ist die Batterie 19a als Akkumulator ausgebildet, so kann dieser über den Stromanschluss 19 wieder aufgeladen werden. Über die Schnittstelle zwischen dem Fahrzeuggerät 10 und dem DSRC-Kommunikationsmodul 20 wird auch das DSRC-Kommunikationsmodul 20 mit Strom versorgt.

Anhand von im Sekundentakt durch den Weggeber 16a bereitgestellten zurückgelegten Längendifferenzen $\Delta s_i$ kann der Fahrzeuggerät-Prozessor 11 im Sekundentakt inkrementell die nach einem Ausfall der Bereitstellung von Standortpositionen bei i=0 zurückgelegte gesamte Weglänge $s_j$ nach j Sekunden zu

$$s_j = \sum_{i=1}^{j} \Delta s_i$$

bestimmen.

Anhand von in Sekunden-Zeitintervallen $\Delta t_i$ aus Tachosignalen ermittelten Geschwindigkeitswerten $v_i$ kann der Fahrzeuggerät-Prozessor 11 im Sekundentakt inkrementell die nach einem Ausfall der Bereitstellung von Standortpositionen bei i=0 zurückgelegte gesamte Weglänge $s_j$ nach j Sekunden zu

$$s_j = \sum_{i=1}^{j} v_i \cdot \Delta t_i$$

bestimmen.

Eine zweite Variante der Fahrzeugeinrichtung 30 ist in Fig. 2a dargestellt. Sie ist im Gegensatz zur ersten Variante der Fahrzeugeinrichtung 30 von Fig. 1a als ein einziges Fahrzeuggerät 10 ausgebildet, das beispielsweise an der Windschutzscheibe des Fahrzeugs 35 (siehe Fig. 2b) befestigt werden kann. Dazu wurde die wesentliche Komponente des DSRC-Kommunikationsmoduls 20 der Fig. 1a, nämlich der DSRC-Sendeempfänger 23 mit dem DSRC-Sende- und Empfangsmittel 23b in das Fahrzeuggerät 10 integriert, wobei die Funktionen des DSRC-Kommunikationsmodul-Prozessors 21 von dem Fahrzeuggerät-Prozessor 11 übernommen werden und die Daten des DSRC-Kommunikationsmodul-Daten-Schreib-Lese-Speichers 27a in dem Daten-Schreib-Lese-Speicher 17a des Fahrzeuggerätes 10 und die Daten des DSRC-Kommunikationsmodul-Arbeitsspeichers 27b in dem Arbeitsspeicher 17b des Fahrzeuggerätes 10 gespeichert werden.

Ferner unterscheidet sich die zweite Variante der Fahrzeugeinrichtung 30 von der ersten dadurch, dass sie nicht an einen Weggeber 16a des Fahrzeugs gekoppelt ist und über kein Gyroskop 16g verfügt. Stattdessen weist das Fahrzeuggerät einen Beschleunigungssensor 16c auf, der die Beschleunigung des Fahrzeugs parallel zu dessen Längsachse, d. h. in Bewegungsrichtung des Fahrzeugs, misst. Damit ist eine Koppelortung nur noch über sehr kurze Strecken und mit eingeschränkter Genauigkeit möglich. Im Falle dieser zweiten Variante der Fahrzeugeinrichtung 30 wird darauf verzichtet, und die Standortpositionen werden "GNSS-only" bestimmt. Immerhin können anhand von Beschleunigungsmesswerten des Beschleunigungssensors recht grob schrittweise zurückgelegte Weglängen $s_j$ bestimmt werden, wenn der GNSS-Empfang ausbleibt, und zwar ausgehend von der Geschwindigkeit $v_0$, die sich aus der Doppler-Verschiebung der GNSS-Signale und/ oder der letzten Standortpositionen dividiert durch das Zeitintervall ihrer Empfangszeitpunkte vor dem GNSS-Empfangsverlust bestimmen lässt, durch schrittweise über Zeitintervalle $\Delta t_i$ erfasste Beschleunigungsmesswerte $a_i$ gemäß

$$s_j = v_0 \sum_{i=1}^{j} \Delta t_i + \frac{1}{2} \sum_{i=1}^{j} a_i \, (\Delta t_i)^2$$

Es ist auch möglich, eine Fahrzeugeinrichtung 30 sowohl mit einem Weggeber 16a gemäß Fig. 1a, einem erwähnten Tachometer 16b und einem Beschleunigungssensor 16c gemäß Fig. 1c auszustatten, wobei eine solche Fahrzeugeinrichtung sowohl die von dem Weggeber 16a gelieferten Längendifferenzen $\Delta s_i$ als auch die von dem Tachometer 16b gelieferten Geschwindigkeitsmesswerte $v_i$ als auch die von dem Beschleunigungssensor a i gelieferten Beschleunigungswerte $a_i$ in die Bestimmung der zurückgelegten Weglänge einbezieht.

Die Fahrzeugeinrichtung 30 ist sowohl in ihrer ersten Variante gemäß Fig. 1a als auch in ihrer zweiten Variante gemäß Fig 1b im ersten Ausführungsbeispiel ausgebildet, die Schritte des erfindungsgemäßen. Verfahrens gemäß dem ersten Ausführungsbeispiel durchzuführen, im zweiten Ausführungsbeispiel und dritten Ausführungsbeispiel ausgebildet, der zentralen Datenverarbeitungseinrichtung 50 die Daten der Standortpositionen zur Durchführung der Schritte des erfindungsgemäßen Verfahrens gemäß dem zweiten und dritten Ausführungsbeispiel zu übermitteln.

ERSTES AUSFÜHRUNGSBEISPIEL

In diesem ersten Ausführungsbeispiel gilt das GNSS-Positionsbestimmungsmodul 12 als erfindungsgemäße Positionsbestimmungseinrichtung und das Fahrzeuggerät 10, welche jeweils das GNSS-Positionsbestimmungsmodul 12 umfassen, als erfindungsgemäße Datenverarbeitungseinrichtung, welche mittels der erfindungsgemäßen Positionsbestimmungseinrichtung die Standortpositionen erzeugt.
Gleichwohl können die Fahrzeugeinrichtung 30 und das Fahrzeuggerät 10 als ein erfindungsgemäßes System aufgefasst werden, in dem der Fahrzeuggerät-Prozessor 11 als erfindungsgemäße Datenverarbeitungseinrichtung gilt. Ein erfindungsgemäßes System schließt auch den nicht dargestellten Fall ein, dass das GNSS-Positionsbestimmungsmodul 12 nicht von dem Fahrzeuggerät 10 umfasst ist, sondern beabstandet von dem Fahrzeuggerät von dem Fahrzeug mitgeführt wird, das auch das Fahrzeuggerät mitführt, und beispielsweise im Funkwege Standortpositionen an das Fahrzeuggerät ohne GNSS-Positionsbestimmungsmodul sendet.

In dem Daten-Schreib-Lese-Speicher 17a des Fahrzeuggeräts 10 der in Fig. 1 schematisch dargestellten Fahrzeugeinrichtung 30 ist eine Datenbank mit Geo-Objekten gespeichert, die die geographische Lage der Tunnel, insbesondere der Tunneleingänge, aller bekannten Tunnel von mehr als einem Kilometer Länge innerhalb eines geographischen Gebietes, für den der Betrieb der Fahrzeugeinrichtung vorgesehen ist, durch Geo-Kreise repräsentiert, die jeweils durch ein vorbestimmte Position als Mittelpunkt und eine Längenangabe als Radius (beispielsweise 50 Meter) gekennzeichnet sind. Tunnel, zu denen Geo-Objekte in der Fahrzeugeinrichtung gespeichert sind, werden als registrierte Tunnel bezeichnet. Jeder der Geo-Kreise ist mit einer geo-objektabhängigen Korrelationsweglänge verknüpft. Ein Geo-Objekt-Datensatz umfasst damit sowohl das Geo-Objekt (in diesem Fall einen Geo-Kreis) als auch die Korrelationsweglänge dieses Geo-Objekts. Die Korrelationsweglänge beträgt jeweils mindestens die Länge des Tunnels, den das Geo-Objekt repräsentiert. Bevorzugt ist die Korrelationsweglänge 10% größer als die die Länge des Tunnels, um mögliche Fehler bei der Weglängenbestimmung abzufangen. Bevorzugt ist die Korrelationsweglänge in jedem Fall 50 bis 500 Meter größer als die Länge des Tunnels, um Abschattungseffekte des Tunnels zu berücksichtigen die im Eingangs- und Ausgangsbereich des Tunnels außerhalb des Tunnels wirksam sind.
Außerdem ist eine vorgegebene objektunabhängige Höchstweglänge mit dem Wert von 1000 Metern in dem Daten-Schreib-Lese-Speicher 17a gespeichert.

Während des Betriebs der Fahrzeugeinrichtung 30 in einem Fahrzeug, das einen Weg 80 zurücklegt, ist das GNSS-Positionsbestimmungsmodul 12 ausgebildet, Navigationssignale von Navigationssatelliten eines Globalen Navigationssatellitensystems (GNSS) mittels der GNSS-Empfangsantenne 12b zu empfangen, diese mittels des GNSS-Empfängers 12a zu decodieren und aus den im Zuge der Decodierung gewonnenen Größen zeitlich aufeinander folgend im Sekundentakt Standortpositionen $p_i$ zu bestimmen, die den Verlauf zumindest von Abschnitten eines der Fahrzeugeinrichtung zurückgelegten Weges 80 repräsentieren, und die bestimmten Standortpositionen $p_i$ über eine Schnittstelle dem Fahrzeuggerät-Prozessor 11 bereitzustellen.

Die Fahrzeugeinrichtung 30 ist in einem Zustand gegebener Betriebsbereitschaft ausgebildet ist, keine mangelnde Betriebsbereitschaft und/ oder eine gegebene Betriebsbereitschaft zu signalisieren, von der Positionsbestimmungseinrichtung 12 empfangene Standortpositionen in einer Trajektoriendatei zu speichern, die den Verlauf eines von dem Fahrzeug zurückgelegten Weges repräsentiert, eine Vollständigkeit diese Trajektoriendatei zu überwachen und die Trajektoriendatei, wenn sie vollständig ist, mittels des Mobilfunk-Sendeempfängers 13 an eine außerhalb und beabstandet vom Fahrzeug angeordneten Mautzentrale 58 zu versenden, welche ausgebildet ist aus den Standortpositionen der Trajektoriendatei befahrene mautpflichtige Streckenabschnitte zu ermitteln.

Alternativ oder optional führt der Fahrzeuggerät-Prozessor 11 selbst die Ermittlung der befahrenen mautpflichtigen Streckenabschnitte durch und übermittelt diese mittels des Mobilfunk-Sendeempfängers 13 an die Mautzentrale 58.

a) Fahrt durch einen registrierten Tunnel

So empfängt im Hinblick auf Fig. 3a bei einer Fahrt durch ein Störungsgebiet 90a in Form eines registrierten Tunnels 90a der Fahrzeuggerät-Prozessor 11 von dem GNSS-Positionsbestimmungsmodul 12 vor dem Tunneleingang zum Zeitpunkt $t_1$ = 1s die Standortposition $p_1$, zum Zeitpunkt $t_2$ = 2s die Standortposition $p_2$, zum Zeitpunkt $t_3$ = 3s die Standortposition $p_3$.

Zusätzlich zu den Koordinaten der bestimmten Standortpositionen $p_i$ bestimmt das GNSS-Positionsbestimmungsmodul 12 für jede Standortposition wenigstens ein Gütemaß $q_i$ der bestimmten Standortpositionen $p_i$ und gibt dieses Gütemaß $q_i$ zusammen mit der bestimmten Standortposition p i an den Fahrzeuggerät-Prozessor 11 aus. Das Gütemaß $q_i$ hängt beispielsweise von der Anzahl der Navigationssatelliten, von den Navigationssignale empfangen werden, ihrer absoluten und relativen Stellung zueinander und zum GNSS-Positionsbestimmungsmodul und der Empfangsqualität der Navigationssignale ab. Ein solches Gütemaß $q_i$ ist beispielsweise die HDOP (horizontal dilution of precision), die angibt, wie hoch die Unsicherheit der bestimmten Standortposition ist. Als Mindestgüte $q_{krit}$ ist eine HDOP von 3,0 im Fahrzeuggerät 10 gespeichert. Die ersten drei Standortpositionen $p_1$, $p_2$, und $p_3$ besitzen diese Mindestgüte, weil ihre HDOP-Werte jeweils kleiner als 3,0 sind.

Andere Gütemaße $q_i$ sind dem Fachmann aus dem Stand der Technik bekannt und können alternativ oder kumulativ zur HDOP als alternatives oder kumuliertes Gütemaß $q_i$ verwendet werden.

In der Nähe zum Tunneleingang wird diese Mindestgüte bei den nachfolgend bestimmten Positionen $p_4$ und $p_5$ nicht mehr erreicht, weil einige Satelliten durch den Berg, durch den der Tunnel 90a führt, abgeschattet werden. Eine Standortposition $p_i$ mangelnder Mindestgüte wird in Fig. 3a und in den übrigen Figuren durch einen ungefüllten Kreis dargestellt, während eine Standortposition $p_i$ vorgegebener Mindestgüte durch einen gefüllten Kreis dargestellt wird.

Im vorliegenden Ausführungsbeispiel bedeuten weniger als drei Standortpositionen ohne vorgegebene Mindestgüte in Folge allerdings noch keine Lücke in einer Reihe von Standortpositionen p i, wenn unmittelbar nach zwei Standortpositionen ohne vorgegebene Mindestgüte eine Standortposition mit vorgegebener Mindestgüte erfasst werden würde.

Wenn mangels Navigationssatellitensignalen innerhalb des Tunnels 90a keine Bestimmung einer Standortposition $p_i$ möglich ist, gibt das GNSS-Positionsbestimmungsmodul 12 keine Standortposition aus, und der Fahrzeuggerät-Prozessor 11 erhält keine Standortposition. Für jede Sekunde, in der der Fahrzeuggerät-Prozessor 11 keine Standortposition erhält, trägt der Fahrzeuggerät-Prozessor in die Reihe der Standortpositionen $p_i$, die zumindest vorübergehend im Arbeitsspeicher 17b gespeichert werden, einen Vermerk ein, der für eine fehlende Standortposition repräsentativ ist. Dies kann beispielsweise das Koordinatenpaar von (Longitude, Latitude) = (0,0) sein, an dem bekanntermaßen kein mautpflichtiger Streckenabschnitt vorliegt.

Über eine Dauer von einer Minute registriert der Fahrzeuggerät-Prozessor 11 sechzig fehlende Standortpositionen. Bei einer angenommenen Geschwindigkeit von 72 km/h des Fahrzeugs, von dem die Fahrzeugeinrichtung 30 mitgeführt wird, entspricht dies einer Tunnellänge von 1,2 Kilometern.

Am Tunnelausgang sind für das GNSS-Positionsbestimmungsmodul 12 wieder genug Navigationssatelliten sichtbar, um Standortpositionen $p_1$, $p_6$ und $p_7$ zu bestimmen, jedoch nicht genug, um die erforderliche Mindestgüte einer HDOP von unter 3,0 zu erreichen.

Nach ausreichender Entfernung des Fahrzeugs vom Tunnelausgang, sind für das GNSS-Positionsbestimmungsmodul 12 wieder genug Navigationssatelliten sichtbar, um Standortpositionen $p_8$, $p_9$ und $p_{10}$ zu bestimmen, die eine ausreichende Mindestgüte einer HDOP von unter 3,0 aufweisen.

Alternativ werden von dem GNSS-Positionsbestimmungsmodul 12 nur vorläufige Standortpositionen - soweit bestimmbar - im Sekundentakt an den Fahrzeuggerät-Prozessor 11 übermittelt, aus denen der Fahrzeuggerät-Prozessor 11 nach Maßgabe einer Vorschrift unter Bildung von Mittelwerten und/ oder Interpolationswerten der vorläufigen Standortpositionen eine Reihe von Standortpositionen $p_i$ bildet, die voneinander durch eine örtliche Differenz beabstandet sind, die größer als eine Mindestdifferenz und kleiner als eine Höchstdifferenz ist oder einer vorgegeben Differenz entspricht. Dies ist im Falle eines Staus oder einer verhältnismäßig geringen Geschwindigkeit von etwa Schrittgeschwindigkeit von Vorteil, weil auf diese Weise der Datenumfang der Positionsdaten beschränkt werden kann, ohne wesentliche Einbußen hinsichtlich der Genauigkeit der durch die Standortpositionen $p_i$ gebildeten Repräsentation des zurückgelegten Weges 80 zu erleiden. Beispielsweise ist die Mindestdifferenz 10 Meter und die Höchstdifferenz 20 Meter. Übertragen auf eine Reihe von Standortposi-

tionen $p_i$ im Sekundentakt bedeutet dies eine Fahrgeschwindigkeit von 36 bis 72 km/ h. Der niedrigen Fahrgeschwindigkeit kann bei Bedarf durch Verknüpfung der Standortpositionen $p_i$ mit gemittelten und/ oder interpolierten Zeitwerten der vorläufigen Standortpositionen Rechnung getragen werden.

Der Fahrzeuggerät-Prozessor 11 ist ferner ausgebildet, anhand von Messwerten des Weggebers (16a, Fig. 1a), des Tachometers 16b (in Fig. 1a gestrichelt dargestellt), und/ oder des Beschleunigungssensors (16c, Fig. 1b) wiederholt im Sekundentakt zu Zeitpunkten $t_j$ ausgehend von einer jeden bestimmten Standortposition $p_i$ seit dem Zeitpunkt $t_i$, an dem sich das Fahrzeug 35 an dieser Standortposition $p_i$ befand, durch das Fahrzeug 35 zurückgelegte Weglängen $s_{j,i}$ zu bestimmen und im Arbeitsspeicher 17b abzulegen. Wenn auf eine erste Standortposition $p_i$, eine zweite Standortposition $p_{i+1}$ von vorgegebener Mindestgüte folgt, ohne dass zwischen der ersten Standortposition $p_i$ und der zweiten Standortposition $p_{i+1}$ eine Positionsbestimmungsunterbrechungsphase durch den Fahrzeuggerät-Prozessor 11 festgestellt wurde, so werden die zu der ersten Standortposition $p_i$ bestimmten zurückgelegten Weglängen $s_{j,i}$ aus dem Arbeitsspeicher 17b gelöscht und nur noch die zu der zweiten Standortposition $p_{i+1}$ zurückgelegten Weglängen $s_{j,i+1}$ im Arbeitsspeicher 17b behalten. Insbesondere kann der Fahrzeuggerät-Prozessor 11 ausgebildet sein, zu jeder Standortposition $p_i$ nur die jeweils zuletzt bestimmte (und damit längste) zurückgelegte Weglänge $s_{j,i}$ im Arbeitsspeicher 17a zu speichern und jeweils durch nachfolgend bestimmte zurückgelegte Weglängen $s_{j+1,i}$ zu ersetzen.

Der Fahrzeuggerät-Prozessor 11 ist ausgebildet, bei dreißig in Folge ausbleibenden Standortpositionen, deren Bereitstellung durch das GNSS-Positionsbestimmungsmodul 12 im Sekundentakt erwartet wurde, eine Positionsbestimmungsunterbrechungsphase zu registrieren, die bei Wiedereinsetzen des Erhalts von Standortpositionen $p_i$ maßgeblich für eine Lücke in der Reihe empfangener Standortpositionen ist. Bei einer Geschwindigkeit von 144 km/ h würde dies einer Tunnellänge von mindestens 600 Metern entsprechen.
Der Fahrzeuggerät-Prozessor 11 ist ferner ausgebildet, eine Positionsbestimmungsunterbrechungsphase zu registrieren, wenn über eine zurückgelegte Strecke von mehr als 600 Metern mehr als 50% der bereitgestellten Standortpositionen nicht die erforderliche Mindestgüte aufweisen und/ oder mehr als 50% der erwarteten Bereitstellungen an Standortpositionen ausbleiben.
Der Fahrzeuggerät-Prozessor 11 ist ferner ausgebildet, eine Positionsbestimmungsunterbrechungsphase zu registrieren, wenn über eine Strecke von (600 - x) Metern mehr als 50% der bereitgestellten Standortpositionen nicht die erforderliche Mindestgüte aufweisen und/ oder mehr als 50% der erwarteten Bereitstellungen an Standortpositionen ausbleiben, und über eine Zeitdauer von (x / 20 m/s) Sekunden keine Standortposition durch das GNSS-Positionsbestimmungsmodul 12 bereitgestellt wird.

Im vorliegenden Fall stellt der Fahrzeuggerät-Prozessor 11 eine Positionsbestimmungsunterbrechungsphase daran fest, dass seit der letzten Standortposition $p_3$, von vorgegebener Mindestgüte über eine Strecke von 40 Metern vor dem Tunneleingang mehr als 50% der der bereitgestellten Standortpositionen (nämlich 2 von 2, d. h. 100%) nicht die erforderliche Mindestgüte aufweisen und unmittelbar anschließend über eine Zeitdauer von (580 m / 20 m/s = 29 Sekunden) keine Standortpositionen bereitgestellt werden. Das Fahrzeug hat in dieser Zeit 580 Meter im Tunnel 90a zurückgelegt. Infolge dieser Feststellung versieht der Fahrzeuggerät-Prozessor die Standortposition $p_3$, im Arbeitsspeicher 17b mit einem Vermerk, der die Standortposition $p_3$ als erste Standortposition 81 (x1) identifiziert.
Zu dieser Standortposition $p_3$ wurde bereits 31 Mal eine seit dem Zeitpunkt $t_3$ zurückgelegte Weglänge $s_{j,3}$ bestimmt, so dass im Arbeitsspeicher 17b bereits ein erste Weglänge $s_{31,3}$ vorliegt.

Alternativ vergleicht der Fahrzeuggerät-Prozessor 11 in einer Phase ohne die Bereitstellung einer Standortpositionen von vorgegebener Mindestqualität nach der zuletzt empfangenen Standortposition $p_3$, die von vorgegebener Mindestqualität ist, seit dieser Standortposition $p_3$ zurückgelegte Weglängen $s_{j,3}$ mit einer Mindestweglänge von M = 600 m. Nachdem bis zu einem Überschreiten der Mindestweglänge M durch eine zurückgelegte Weglänge $s_{ini} = s_{31,3} = 620$ Meter keine der zuletzt empfangenen Standortposition $p_3$ nachfolgende Standortposition von vorgegebener Mindestgüte durch den Fahrzeuggerät-Prozessor 11 empfangen wurde, stellt der Fahrzeuggerät-Prozessor 11 das Vorliegen der Positionsbestimmungsunterbrechungsphase fest.

Nun prüft der Fahrzeuggerät-Prozessor 11, ob die erste Standortposition 81 räumlich mit einem der in dem Daten-Schreib-Lese-Speicher 17a gespeicherten Geo-Kreise in dem Sinne korreliert, dass die erste Standortposition 81 in einem der gespeicherten Geo-Kreise liegt.

Dazu bestimmte in einem ersten Schritt der Fahrzeuggerät-Prozessor 11 durch Vergleich der ersten Standortposition 81 mit den Mittelpunkten aller gespeicherten Geo-Kreise, welcher nächste Geo-Kreis der ersten Standortposition 81 am nächsten liegt. In einem zweiten Schritt prüft der Fahrzeuggerät-Prozessor, ob der Abstand der ersten Standortposition 81 zum Mittelpunkt des nächsten Geo-Kreises kleiner ist als der Radius des nächsten Geo-Kreises. Im Falle dieser Tunnelfahrt stellt der Fahrzeuggerät-Prozessor 11 fest, dass die erste Standortposition 81 in dem Geo-Kreis mit dem Bezugszeichen 91 liegt und insofern die gefragte räumliche Korrelation zu einem der gespeicherten Geo-Kreise aufweist. Mit dem Geo-Kreis 91 verknüpft ist eine Korrelationsweglänge L von 1200 m für den Tunnel 90a, der eine Länge von 1000 m aufweist.
Darüber hinaus prüft der Fahrzeuggerät-Prozessor 11, ob der ermittelte Geo-Kreis bezüglich der Fahrt des Fahrzeugs den Tunneleingang oder den Tunnelausgang repräsentiert. Dazu ermittelt der Fahrzeuggerät-Prozessor 11 eine Vorgängerposition $p_0$, (nicht dargestellt) die eine Standortposition des Fahrzeugs 35 zu einem früheren Zeitpunkt $t_0 < t_1$ ist, welche außerhalb des Geo-Kreises liegt, jedoch innerhalb eines Geo-Kreises vom doppelten Durchmesser mit demselben Mittelpunkt. Schneidet die Verbindungslinie zwischen der Vorgängerposition $p_o$ und der ersten Standortposition den Geo-Kreis in einem vorbestimmten Winkelbereich (in diesem Fall bei West-Nord-West zwischen 270° und 315°) so gilt die Fahrt als Tunneleinfahrt und die räumliche Korrelation der ersten Standortposition mit dem Geo-Objekt 91a wird durch den Fahrzeuggerät-Prozessor 11 festgestellt.

Infolge der Ermittlung des korrelierenden Geo-Objekts 91a prüft der Fahrzeuggerät-Prozessor 11, ob die erste Weglänge $s_{31,3}$ größer ist als die Korrelationsweglänge L von 1200 m. Die erste Weglänge beträgt jedoch nur 620 m, so dass der Fahrzeuggerät-Prozessor zunächst kein Fehlersignal erzeugt.

In der Folge stellt der Fahrzeuggerät-Prozessor wiederholt im Sekundentakt fest, dass weiterhin keine Standortpositionen von der Positionsbestimmungseinrichtung 12 bereitgestellt werden. Im Sekundentakt berechnet er weitere kumulierte Weglängen $s_{j,3}$ mit j>31 und vergleicht diese jeweils mit der Korrelationsweglänge L.

Im Prinzip wartet der Fahrzeuggerät-Prozessor 11 nach der Feststellung der Positionsbestimmungsunterbrechungsphase auf die nächste Standortposition von ausreichender Güte, die durch das GNSS-Positionsbestimmungsmodul 12 bereitgestellt wird. Bleibt eine solche nächste Standortposition von ausreichender Güte über einen Zeitraum von mehr als 24 Stunden seit der Feststellung der Positionsbestimmungsunterbrechungsphase aus, so erzeugt der Fahrzeuggerät-Prozessor ein Fehlersignal, welches mittels der Anzeigevorrichtung 15 in Form einer Fehlermeldung dem Nutzer auf dem Fahrzeuggerät 10 sichtbar gemacht wird.

Im vorliegenden Fall erhält der Fahrzeuggerät-Prozessor 11 dreiunddreißig Sekunden nach der Feststellung der Positionsbestimmungsunterbrechungsphase die Standortposition $p_7$ von dem GNSS-Positionsbestimmungsmodul 12 übermittelt, welche die letzte Standortposition von nicht hinreichender Güte innerhalb der Positionsbestimmungsunterbrechungsphase ist:

Für diese letzte Standortposition von nicht hinreichender Güte ermittelt der Fahrzeuggerät-Prozessor letztmalig die zurückgelegte Weglänge $s_{max} = s_{64,3}$ zu 1100 Metern. Diese ist wiederum nicht größer als die Korrelationsweglänge von 1200 Metern.

Vierunddreißig Sekunden nach der Feststellung der Positionsbestimmungsunterbrechungsphase erhält der Fahrzeuggerät-Prozessor 11 die Standortposition $p_8$ von dem GNSS-Positionsbestimmungsmodul 12 übermittelt, welche seit Beginn der Positionsbestimmungsunterbrechungsphase die erste Standortposition von der vorgegebenen Mindestgüte, d. h von hinreichender Güte, ist. Damit registriert der Fahrzeuggerät-Prozessor, dass die Positionsbestimmungsunterbrechungsphase beendet ist, wodurch auch der Prüfungsprozess für diese Positionsbestimmungsunterbrechungsphase abgeschlossen ist, ohne dass der Fahrzeuggerät-Prozessor 11 ein Fehlersignal erzeugt.

Für ein zum Fahrzeug 35 in Gegenrichtung fahrendes Fahrzeug würde die Fahrzeugeinrichtung dieses Fahrzeugs bei Durchfahrt durch den Tunnel 90a das korrelierende Geo-Objekt 92a ermitteln, welches aus Sicht des Fahrzeugs 35 den. Tunnelausgang modelliert.

In einer alternativen Variante dieses ersten Ausführungsbeispiels sind die Geo-Objekte jeweils nicht mit einer Korrelationsweglänge verknüpft, sondern weisen eine eindeutige Kennung sowie ein Verweisattribut auf, welches die Kennung eines Partner-Geo-Objekts enthält. Der Fahrzeuggerät-Prozessor 11 bestimmt für ein korrelierendes Geo-Objekt eine die Korrelationsweglänge dadurch, dass er zunächst anhand des Verweisattributs das Partner-Geo-Objekt des korrelierenden Geo-Objekts bestimmt. In diesem Ausführungsbeispiel ist für das korrelierende Geo-Objekt 91a, welches den Tunneleingang des Tunnels 90a modelliert, das Partner-Geo-Objekt das Geo-Objekt 92a, welches den Tunnelausgang des Tunnels 90a beziehungsweise den Tunneleingang des Tunnels 90a für den Gegenverkehr modelliert. Anschließend bestimmt der Fahrzeuggerät-Prozessor 11 den Abstand zwischen dem Mittelpunkt des korrelierenden Geo-Kreises 91a und dem Mittelpunkt des Partner-Geo-Kreises 92a. Die Korrelationsweglänge für das korrelierende Objekt ergibt sich aus der Summe dieses Abstandes und einer Karenzlänge von 10 % dieses Abstandes, mindestens jedoch 100 Meter. In diesem Fall ist beträgt der Mittelpunktsabstand der beiden Geo-Objekte 1120 Meter, die Karenzlänge 112 Meter und die Referenzlänge mithin 1232 Meter.

In einem alternativen Prüfungsprozess kann der Fahrzeuggerät-Prozessor 11 ausgebildet sein, unabhängig von dem möglichen Vorliegen einer Positionsbestimmungsunterbrechungsphase für jede erfasste Standortposition $p_i$ zu prüfen, ob diese mit einem Geo-Objekt korreliert. Im vorliegenden Beispiel trifft dies bereits auf die Standortposition $p_1$ zu. Infolge der Befahrung des Geo-Objekts 91a ist mit einer baldigen Positionsbestimmungsunterbrechungsphase zu rechnen, so dass der Fahrzeuggerät-Prozessor 11 bereits ab der Standortposition $p_1$ beginnt, ab dieser Standortposition $p_i$ zurückgelegte Weglängen zu bestimmen. Solange jedoch keine Positionsbestimmungsunterbrechungsphase festgestellt wird, ist keine erste Weglänge zu bestimmen, die einem Vergleich mit der Korrelationsweglänge zu unterwerfen wäre. Schließlich ist ein Fehlersignal nur dann zu erzeugen, wenn während einer Positionsbestimmungsunterbrechungsphase die erste Weglänge die Korrelationsweglänge überschreitet.

In einem weiteren alternativen Prüfungsprozess kann der Fahrzeuggerät-Prozessor 11 ausgebildet sein, erst dann die erste Standortposition $p_3$, bezüglich der die Positionsbestimmungsunterbrechungsphase festgestellt wurde, auf eine räumliche Korrelation mit einem Geo-Objekt vergleichen, wenn eine bestimmte zurückgelegte Weglänge die objektunabhängige Höchstweglänge überschreitet. Im Falle dieser Tunnelfahrt kommt es dazu, weil bei einer Durchschnittsgeschwindigkeit von 20 m/s im Tunnel 90a bereits neunundzwanzig Sekunden nach der Feststellung der Positionsbestimmungsunterbrechungsphase mit einer kumulierten Weglänge von $s_{60,3}$ = 1020 Metern die objektunabhängige Höchstweglänge von 1000 Metern überschritten wird (zur Erinnerung: weiter oben wurde die maximale Weglänge ohne hinreichenden GNSS-Empfang zu $s_{max}$ = $s_{64,3}$ =1100 Meter berechnet). Nun erst wird es nötig zu prüfen, ob die vorliegende Positionsbestimmungsunterbrechungsphase einer bekannten Störungsregion zugeordnet werden kann. Bekanntermaßen korreliert die erste Standortposition 81 ($p_3$) mit dem Geo-Objekt 91a, so dass zunächst kein Fehlersignal aufgrund des Überschreitens der objektunabhängige Höchstweglänge durch den Fahrzeuggerät-Prozessor 11 erzeugt wird. Aus diesem Grund ermittelt der Fahrzeuggerät-Prozessor 11, solange er keine zweite Standortposition von der Positionsbestimmungseinrichtung 12 empfängt, fortlaufend weitere zurückgelegte Weglängen, von denen jedoch bekanntermaßen keine die Korrelationsweglänge von 1200 Metern überschreitet. Dazu kommt es auch nicht, weil zuvor die Positionsbestimmungsunterbrechungsphase durch Empfang der zweiten Standortposition 82 ($p_8$) beendet wird, ohne dass es zur Erzeugung eines Fehlersignals durch den Fahrzeuggerät-Prozessor 11 kommt.

Die erfindungsgemäßen Geo-Objekte müssen nicht als Geo-Kreise ausgebildet sein, und sie müssen auch nicht auf den Tunneleingang beschränkt vorliegen. Anhand von Fig. 3a', welche dieselben erfassten Standortposition der zuvor beschriebenen Fahrt durch ein Störungsgebiet 90 in Form eines registrierten Tunnels 90a darstellt, wird ein sich über das gesamte Störungsgebiet des Tunnels 90a erstreckendes Geo-Objekt 93a beschrieben, das eine Zigarrenform aufweist und damit für jede Fahrtrichtung als Geo-Objekt des Tunnels 90a wirken kann. Dieses Geo-Objekt ist durch zwei vorbestimmte Positionen (nicht dargestellt) und einen Radius gekennzeichnet, der den Randabstand zu jedem Punkt der Verbindungslinie zwischen den zwei vorbestimmten Positionen definiert.

Unabhängig von der Fahrtrichtung wird der Fahrzeuggerät-Prozessor 11 bei jeder Einfahrt in den Tunnel 90a für eine erste Standortposition auf dasselbe korrelierende Geo-Objekt 93a stoßen.

b) i) Fahrt durch einen nicht registrierten Tunnel und

ii) Fahrt mit Positionsdatenlücke auf kurzer Strecke

Eine Fahrt durch einen nicht registrierten Tunnel entspricht vom Ergebnis her einer Fahrt außerhalb eines Störungsgebietes, bei der aufgrund eines technischen Defeks (Leiterbruch oder Kurzschluss an der GNSS-Empfangsantenne) oder einer Störung (beispielsweise durch Jamming) auf einer Strecke, die kürzer ist als die vorgegebene objektunabhängige Höchstweglänge, keine Standortpositionen vorgegebener Mindestgüte durch das GNSS-Positionsbestimmungsmodul 12 bereitgestellt werden. Die in Fig. 3b veranschaulichte Reihe bestimmter Standortpositionen $p_i$ ist damit für die beiden genannten Fahrtvarianten gültig.

Hinsichtlich der mangelnden Bestimmung von Standortpositionen unterscheiden sich diese Fahrtvarianten von der zuvor unter a) beschriebenen Fahrtvariante dadurch, dass die Bereitstellung von Standortpositionen nicht länger als 37 Sekunden ausbleibt, während denen das Fahrzeug eine Strecke von 740 Metern zurücklegt.

Der Versuch des Fahrzeuggerät-Prozessors 11, infolge der Feststellung des Beginns einer Positionsbestimmungsunterbrechungsphase ab der ersten Standortposition 81 ($p_3$) nach 31 Sekunden eine räumliche Korrelation der ersten Standortposition 81 mit einem der gespeicherten Geo-Objekte zu ermitteln, scheitert.

Damit ist eine erste der zwei notwendigen Bedingungen für die erfindungsgemäße Erzeugung des Fehlersignals erfüllt. Infolge der Feststellung des Beginns der Positionsbestimmungsunterbrechungsphase bestimmt der Fahrzeuggerät-Prozessor 11 wiederholt im Sekundenabstand die kumuliert zurückgelegte Weglänge und vergleicht diese mit der geoobjekt-unabhängigen Höchstweglänge von W = 1000 Metern.

Die zuletzt vor der Ende der Positionsbestimmungsunterbrechungsphase, die mit der Erfassung der zweiten Standortposition 82 ($p_8$) nach 37 Sekunden festgestellt wurde, ermittelte maximale Weglänge beträgt 720 Meter. Da dies nicht größer ist als die geo-objektunabhängigen Höchstweglänge von W = 1000 Metern und anschließend die. Positionsbestimmungsunterbrechungsphase beendet ist, bricht der Fahrzeuggerät-Prozessor die fortlaufende Bestimmung der kumulierten zurückgelegten Weglänge ab und erzeugt kein Fehlersignal.

Diesbezüglich ist es vorteilhaft, die Ermittlung der Positionsbestimmungsunterbrechungsphase als,erste Prüfung gegenüber der räumlichen Korrelationsprüfung mit jeder erfassten Standortposition vorzuziehen, weil nur dann, wenn aufgrund einer festgestellten Positionsbestimmungsunterbrechungsphase, eine Prüfung der ersten Standortposition auf räumliche Korrelation mit einem der gespeicherten Geo-Objekten fällig wird und andernfalls vermieden werden kann.

c) Fahrt mit Positionsdatenlücke auf langer Strecke außerhalb eines Tunnels

Fig. 3c veranschaulicht eine Situation, in der auf einer Fahrt außerhalb eines explizit vorbekannten Störungsgebietes, bei der aufgrund eines technischen Defekts (Leiterbruch oder Kurzschluss an der GNSS-Empfangsantenne) oder einer Störung (beispielsweise durch Jamming im Fahrzeug) auf einer Strecke, die länger ist als die vorgegebene objektunabhängig Höchstweglänge W, keine Standortpositionen durch das GNSS-Positionsbestimmungsmodul 12 bereitgestellt werden. Hinsichtlich der mangelnden Bestimmung von Standortpositionen entspricht diese Fahrtvariante der zuvor unter a) beschriebenen Fahrtvariante, bei der Bereitstellung von Standortpositionen 60 Sekunden ausbleibt, während denen das Fahrzeug eine Strecke von 1200 Metern zurücklegt.

Der Versuch des Fahrzeuggerät-Prozessors 11, infolge der Feststellung des Beginns einer Positionsbestimmungsunterbrechungsphase ab der ersten Standortposition 81 ($p_3$) nach 31 Sekunden eine räumliche Korrelation der ersten Abstandsposition 81 ($p_3$) mit einem der gespeicherten Geo-Objekte zu ermitteln, scheitert.

Damit ist eine erste der zwei notwendigen Bedingungen für die erfindungsgemäße Erzeugung des Fehlersignals erfüllt. Infolge der Feststellung des Beginns der Positionsbestimmungsunterbrechungsphase bestimmt der Fahrzeuggerät-Prozessor 11 wiederholt im Sekundenabstand die kumuliert zurückgelegte Weglänge und vergleicht diese mit der geoobjekt-unabhängigen Höchstweglänge von W = 1000 Metern.

Nach 51 Sekunden ist die Positionsbestimmungsunterbrechungsphase noch nicht beendet, weil bis dahin keine zweite Standortposition von der Positionsbestimmungseinrichtung 12 an den Fahrzeuggerät-Prozessor 11 bereitgestellt wurde. In diesem Moment beträgt die kumulierte zurückgelegte Weglänge 1020 Meter und der Fahrzeuggerät-Prozessor 11 stellt fest, dass die kumulierte zurückgelegte Weglänge größer ist als die geo-objekt-unabhängige Höchstweglänge von W = 1000 Metern.

Mithin erzeugt in diesem Fall der Fahrzeuggerät-Prozessor 11ein Fehlersignal und zählt die Anzahl der erzeugten Fehlersignale. Bei Erreichen oder Überschreiten einer vorgegebenen Maximalanzahl von erzeugten Fehlersignalen überführt der Fahrzeuggerät-Prozessor 11 die Fahrzeugeinrichtung 30 in einen Zustand der mangelnden Betriebsbereitschaft, wobei der Fahrzeuggerät-Prozessor 11 eine Zustandsänderung des Betriebsstatus, der in dem Sicherheitsmodul 18 gespeichert ist, von "entsperrt" auf "gesperrt" bewirkt. Zusätzlich wird eine Fehlermeldung auf der Anzeigeeinrichtung ausgegeben, mit der der Nutzer aufgefordert wird, seine Fahrzeugeinrichtung einer Inspektion zu unterwerfen. Ferner wird die Funktion des Fahrzeuggerät-Prozessors 11, Standortpositionen von dem GNSS-Positionsbestimmungsmodul 12 zu empfangen oder aus von dem GNSS-Positionsbestimmungsmodul 12 bereitgestellten GNSS-Positionen zu bestimmen, und/ oder die Standortpositionen in einer bestimmten Weise, die dem bestimmungsgemäßen Betrieb des Fahrzeuggerätes 10 entspricht, zu verarbeiten abgestellt.

Diese Verarbeitung kann das Bestimmen einer befahrenen Streckenabschnitts aus den Standortpositionen und/ oder die Übermittlung einer Trajektoriendatei mit diesen Standortpositionen an die Mautzentrale 58 betreffen.

Jedenfalls weist der Fahrzeuggerät-Prozessor 11 den Mobilfunk-Sendeempfänger 13 an, die im Zustand gegebener Betriebsbereitschaft zuletzt gespeicherte Trajektoriendatei, einschließlich der ersten Standortposition unabhängig von ihrer Vollständigkeit mittels der ersten Kommunikationseinrichtung an die Zentrale zu versenden.

d) Fahrt mit Positionsdatenlücke auf langer Strecke durch zwei Tunnel

Unabhängig von einer Korrelation der ersten Standortposition 81 mit irgendeinem der gespeicherten Geo-Objekte erzeugt der Fahrzeuggerät-Prozessor 11 spätestens dann ein Fehlersignal, wenn die während einer Positionsbestimmungsunterbrechungsphase kumuliert zurückgelegte Weglänge größer ist als der größte Korrelationsabstand aller für die betroffene Region gespeicherten Geo-Objekte, und insbesondere größer ist als der längste Tunnel der betroffenen Region, der durch ein oder mehrere Geo-Objekte modelliert wurde. Dies ist auf die Region der Bundesrepublik Deutschland bezogen der Rennsteigtunnel mit einer Länge von 7916 Metern. Der größte Korrelationsabstand beträgt L = 8800 Meter.

Es besteht die - wenn auch selten auftretende - Möglichkeit, dass ein GNSS-Ausfall mit einem Geo-Objekt zusammenfällt, der einen Tunneleingang modelliert, wobei sich die Positionsbestimmungsunterbrechungsphase in diesem Fall auch über ein Fehlergebiet erstreckt, das außerhalb eines Störungsgebietes (genauer: außerhalb aller bekannten, d. h. durch Geo-Objekte modellierten, Störungsgebiete) liegt. Damit liegt eine meldungsbedürftige systemtechnische Störung vor, für die ein Fehlersignal zu erzeugen ist.

Ein solcher Fall wird nun anhand der Fig. 3d und Fig. 3d' näher erläutert:

Im Falle der Fig. 3d werden die Störungsgebiete 90a und 90b jede der beiden Fahrtrichtungen jeweils durch zwei kreisförmige Geo-Objekte (91a und 92a für das erste Störungsgebiet 90a sowie 91b und 92b für das zweite Störungsgebiet 90b) modelliert, die laut den Koordinaten ihrer vorbestimmten Positionen als Mittelpunkte und ihrer Radien dort in der Zufahrt zum Störungsgebiet 90a/ 90b und in der Abfahrt vom Störungsgebiet 90a/ 90b angeordnet sind, wo gerade noch beziehungsweise wieder ein Empfang von GNSS-Signalen möglich ist.

Mit jedem der Geo-Objekte 91a und 92a ist eine Korrelationsweglänge $L_1$ = 1100 m des ersten Tunnels verknüpft, mit jedem der Geo-Objekte 91b und 92b ist eine Korrelationsweglänge $L_2$= 1200 m des zweiten Tunnels verknüpft.

Im Falle der Fig. 3d' werden die Störungsgebiete 90a und 90b jeweils durch ein kreisförmiges Geo-Objekt (93a für das erste Störungsgebiet 90a sowie 93b für das zweite Störungsgebiet 90b) modelliert, welche laut den Koordinaten ihrer vorbestimmten Positionen als Mittelpunkte und ihrer Radien so angeordnet sind, dass sie das Störungsgebiet vollständig überdecken und teilweise in der Zufahrt zum Störungsgebiet 90a/ 90b und teilweise in der Abfahrt vom Störungsgebiet 90a/ 90b angeordnet sind, wo gerade noch beziehungsweise wieder ein Empfang von GNSS-Signalen möglich ist.

Ein Geo-Objekt, das für ein Störungsgebiet modelliert wurde, für das kein weiteres (Partner-)Geo-Objekt modelliert wurde, kann auch als Solitär-Geo-Objekt bezeichnen.

Das zum ersten Tunnel gehörende Geo-Objekte 93a weist einen Durchmesser von 900 m auf. Das zum zweiten Tunnel gehörende Geo-Objekte 93b weist einen Durchmesser von 1000 m auf. Im Falle einer Identifizierung eines dieser GeoObjekte als mit einer ersten Standortposition korrelierendes Geo-Objekt wird der Fahrzeuggerät-Prozessor 11 unter Beaufschlagung von 10% auf den Durchmesser, mindestens jedoch 200 m, eine Korrelationsweglänge L des betreffenden korrelierenden Objekts bestimmen.

Entlang des von dem Fahrzeug zurückgelegten Weges 80 werden vor der Einfahrt in einen ersten Tunnel, der dem ersten Störungsgebiet 90a entspricht, durch das GNSS-Positionsbestimmungsmodul 12 die Standortpositionen $p_1$ bis $p_5$ von vorgegebener Mindestgüte an den Fahrzeuggerät-Prozessor 11 geliefert. Im ersten Störungsgebiet'90a kann das GNSS-Positionsbestimmungsmodul 12 keine Navigationssignale mehr von GNSS-Satelliten empfangen und demzufolge auch keine Standortpositionen bestimmten und an den Fahrzeuggerät-Prozessor 11 liefern.

Während der Fahrt durch das erste Störungsgebiet 90a wird durch einen Wackelkontakt die elektrische Verbindung zwischen der GNSS-Antenne 12b und dem GNSS-Empfänger 12a unterbrochen. Das führt dazu, dass das GNSS-Positionsbestimmungsmodul 12 auch nach Verlassen des ersten Tunnels (d. h. des ersten Störungsgebietes 90a) zunächst noch keine GNSS-Signale empfangen kann. In diesem Zustand fährt das Fahrzeug in einen zweiten Tunnel ein, der durch das zweite Störungsgebiet 90b repräsentiert wird.

Während der Fahrt durch das zweite Störungsgebiet 90b wird durch den Wackelkontakt die elektrische Verbindung zwischen der GNSS-Antenne 12b und dem GNSS-Empfänger 12a wieder hergestellt. Das führt dazu, dass das GNSS-Positionsbestimmungsmodul 12 nach Verlassen des zweiten Tunnels (d. h. des zweiten Störungsgebietes 90b) wieder GNSS-Signale empfangen und aus diesen im Sekundentakt die Standortpositionen $p_5$ bis $p_{10}$ berechnen kann, welche es - ebenfalls im Sekundentakt - an den Fahrzeuggerät-Prozessor 11 bereitstellt.

Der Fahrzeuggerät-Prozessor 11 stellt fest, dass es nach dem Empfang der ersten Standortposition 81 ($p_5$) zu einer Positionsbestimmungsunterbrechungsphase kommt, weil seit dem Empfang der ersten Standortposition 81 (p s) eine kumulierte Weglänge zurückgelegt wurde, die eine vorgegebenen Mindestweglänge von 100 Metern überschreitet, ohne dass der Fahrzeuggerät-Prozessor 11 nach der ersten Standortposition eine zweite Standortposition von dem GNSS-Positionsbestimmungsmodul 12 empfangen hat, die eine Beendigung der Positionsbestimmungsunterbrechungsphase vor deren Registrierung durch den Fahrzeuggerät-Prozessor 11 bedeutet hätte.

Bezogen auf Fig. 3d führt der Fahrzeuggerät-Prozessor 11 anschließend im Sekundentakt die Bestimmung der kumuliert zurückgelegten Weglänge fort und vergleicht diese mit der Korrelationsweglänge von L = 1100 m, die mit dem Geo-Objekt 91 a verknüpft ist, mit dem die erste Standortposition 81 ($p_5$) eine räumliche Korrelation aufweist.

Bezogen auf Fig. 3d' führt der Fahrzeuggerät-Prozessor 11 anschließend im Sekundentakt die Bestimmung der kumuliert zurückgelegten Weglänge fort und vergleicht diese mit der Korrelationsweglänge von L = 1100 m, die der Fahrzeuggerät-Prozessor 11 wie oben beschrieben aus dem Durchmesser des Geo-Objektes 93a bestimmt hat, mit dem die erste Standortposition 81 ($p_5$) eine räumliche Korrelation aufweist.

Nach 56 Sekunden Andauern der Positionsbestimmuhgsunterbrechungsphase beträgt die kumulierte zurückgelegte Weglänge 1120 Meter. Dies übersteigt die Korrelationsweglänge der korrelierenden Geo-Objekte 91a beziehungsweise 93a.

Infolgedessen erzeugt der Fahrzeuggerät-Prozessor 11 ein Fehlersignal.

## ZWEITES AUSFÜHRUNGSBEISPIEL

In diesem zweiten Ausführungsbeispiel gilt die Fahrzeugeinrichtung 30 als erfindungsgemäße Positionsbestimmungseinrichtung, denn sie übermittelt die bestimmte erste Standortposition 81 durch den Mobilfunk-Sendeempfänger 13 an eine von einem Mautsystem 70 gemäß Fig. 2a/ Fig. 2b umfasste zentrale Datenverarbeitungseinrichtung 50, welche insofern als erfindungsgemäße Datenverarbeitungseinrichtung gilt.

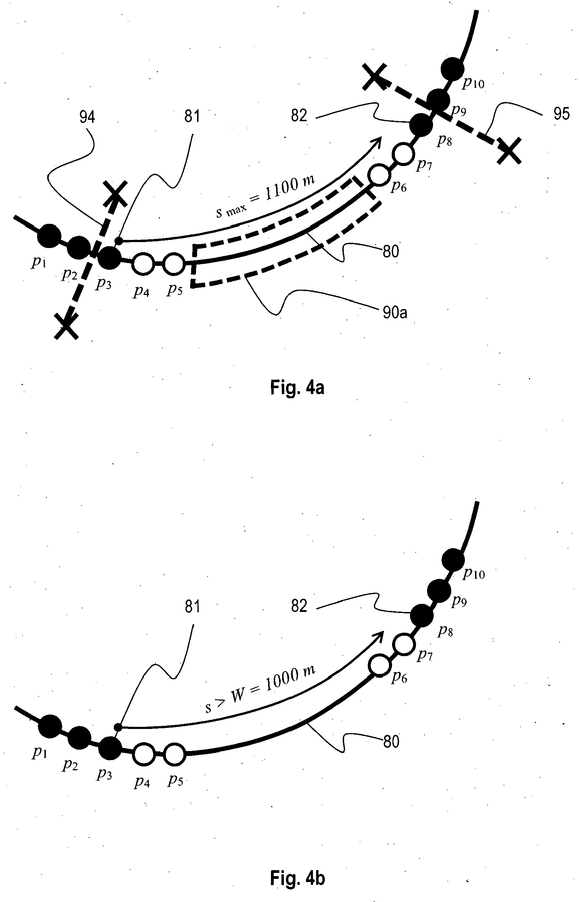

Gemäß dem zweiten Ausführungsbeispiel empfängt der Fahrzeuggerät-Prozessor 11 vorläufige Standortpositionen in Form von GNSS-Positionen im Sekundentakt von dem GNSS-Positionsbestimmungsmodul 12 und speichert diese zunächst jeweils zusammen mit einer Zeitinformation von der Funkuhr 14, die jeweils dem Zeitwert des Empfangs der GNSS-Position entspricht, im Arbeitsspeicher 17a ab. Jeweils im Umkreis von 100m benachbarte GNSS-Positionen werden anschließend von dem Fahrzeuggerät-Prozessor 11 gruppenweise zu einer polynomialen Regressionskurve (z. B. Spline) verarbeitet, aus der anschließend in 20-Meter-Schritten einzelne Standortpositionen $p_i$ mit entsprechenden interpolierten Positionszeitwerten ti entnommen werden, die repräsentativ für den zurückgelegten Weg 80 in Fig. 4a und Fig. 4b sind. Andere, dem Fachmann geläufige Verfahren zur Datenglättung und -reduktion können alternativ verwendet werden, um aus verschieden eng oder weit polydistanten GNSS-Positionen äquidistante Standortpositionen zu gewinnen. Die polynomiale Regressionskurve wird dort unterbrochen, wo im Abstand von mehr als 100 m keine GNSS-Positionen vorliegen. Diese Unterbrechung entspricht der Erkennung einer Positionsbestimmungsunterbrechungsphase. Soweit in die Regression gruppenweise nicht weniger als 50% GNSS-Positionen von vorgegebener Mindestgüte eingehen, gelten die aus diesen ermittelten Standortpositionen von vorgegebener Mindestgüte. Das sind in Fig. 4a und Fig. 4b die Standortpositionen $p_1$, $p_2$, $p_3$, $p_8$, $p_9$ und $p_{10}$.

Soweit in die Regression gruppenweise weniger als 50% GNSS-Positionen von vorgegebener Mindestgüte eingehen, gelten die aus diesen ermittelten Standortpositionen nicht von vorgegebener Mindestgüte. Das sind in Fig. 4a und Fig. 4b die Standortpositionen $p_4$, $p_5$, $p_6$ und $p_7$.

Zwischen der Standortposition $p_5$ und $p_6$ liegen aufgrund der Abschattung durch einen Tunnel oder aufgrund eines technischen Defekts oder einer Störung - und der daraus resultierenden Unterbrechung der polynomialen Regressionskurve - keine weiteren Standortpositionen vor.

Nachdem der Fahrzeuggerät-Prozessor 11 eine Positionsbestimmungsunterbrechungsphase ermittelt und als erste Standortposition 81 die Standortposition $p_3$ bestimmt hat, weist der Fahrzeuggerät-Prozessor 11 den Mobilfunk-Sendeempfänger 13 an, die erste Standortposition 81 einschließlich ihrer beiden Vorgänger-Standortpositionen $p_1$ und $p_2$ sowie einer anhand der Messwerte des Weggebers 16a, Tachometers 16b und/ oder Beschleunigungssensors 16c ermittelten, seit dem Zeitpunkt der Anwesenheit des Fahrzeugs an der ersten Standortposition 81 ($p_3$) kumuliert zurückgelegten ersten Weglänge und wenigstens einer der zuvor erwähnten Kennungen der Fahrzeugeinrichtung 30 von dem Fahrzeuggerät 10 mittels des über das Mobilfunknetz 40 an die zentrale Datenverarbeitungseinrichtung 50 zu übertragen.

In der zentralen Datenverarbeitungsvorrichtung 50 wird diese drei Standortpositionen kurze Fahrspurdatei über die zentrale Kommunikationseinrichtung 53, beispielsweise ein Gateway, empfangen und vom zentralen Prozessor 51 unter der Kennung 30 im zweiten zentralen Datenspeicher 57 der zentralen Datenverarbeitungseinrichtung 50 abgespeichert.

In dem ersten zentralen Datenspeicher 56 der zentralen Datenverarbeitungseinrichtung 50 ist eine Datenbank mit Geo-Objekten gespeichert, die die geographische Lage der Tunneleingänge und Tunnelausgänge aller bekannten Tunnel von mehr als einem Kilometer Länge innerhalb eines geographischen Gebietes, für den der Betrieb der Fahrzeugeinrichtung vorgesehen ist, durch Geo-Linien repräsentiert, die jeweils durch ein erste vorbestimmte Position und zweite vorbestimmte Position gekennzeichnet sind. Tunnel, zu denen Geo-Objekte in dem ersten zentralen Datenspeicher 56 gespeichert sind, werden als registrierte Tunnel bezeichnet. Außerdem ist ein vorgegebener unterer Höchstabstand mit dem Wert von 1000 Metern in dem ersten zentralen Datenspeicher 56 gespeichert.

Darüber hinaus ermittelt die Fahrzeugeinrichtung 30 anhand der Messwerte des Weggebers 16a, Tachometers 16b und/ oder Beschleunigungssensors 16c im Sekundentakt eine seit dem Zeitpunkt der Anwesenheit des Fahrzeugs an der ersten Standortposition 81 ($p_3$) über die erste Weglänge hinaus weitere kumuliert zurückgelegte Weglängen.

Jedes Mal dann, wenn eine weitere ermittelte Weglänge mehr als 100 Meter größer ist als die zuletzt an die zentrale Datenverarbeitungseinrichtung 50 versendete Weglänge, sendet die Fahrzeugeinrichtung diese ermittelte weitere Weglänge an die zentrale Datenverarbeitungseinrichtung 50. Dieses Verfahren beugt einem unnötigen Versand von weiteren Weglängen vor, die keinen wesentlichen Fortschritt des Fahrzeugs auf seinem Weg bedeuten, insbesondere im Staufall oder in Falle zählfließenden Verkehrs.

Stellt die Fahrzeugeinrichtung 30 durch den Empfang einer zweiten Standortposition von hinreichender Güte (d. h. einer Güte, die nicht schlechter ist als eine vorgegebene Mindestgüte) das Ende der Positionsbestimmungsunterbrechungsphase fest, so sendet sie diese zweite Standortposition an die zentrale Datenverarbeitungseinrichtung 50.

a) Fahrt durch einen registrierten Tunnel

Dieser Fall ist in Fig. 4a dargestellt.

Der zentrale Prozessor 51 prüft nun zunächst, ob eine Verbindungslinie zwischen zwei unmittelbar benachbarten Standortpositionen $p_i$ und $p_{i+1}$ der Fahrspurdatei eine der im ersten zentralen Datenspeicher 56 gespeicherten Geo-Linien schneidet. Dazu wählt der zentrale Prozessor zunächst die vorletzte Standortposition $p_2$ von vorgegebener Mindestgüte vor der Positionsdatenlücke aus und bestimmt aus der Auswahl von Geo-Linien diejenige, deren erste vorbestimmte Position den geringsten Abstand zu der vorletzten Standortposition $p_2$ aufweist. Dies ist die Geo-Linie mit dem Bezugzeichen 94. Anschließend bestimmt der zentrale Prozessor 51 nach einer dem Fachmann bekannten mathematischen Methode, ob ein Schnittpunkt zwischen der Geo-Linie 94 und einer Verbindungslinie zwischen den Standortpositionen $p_2$ und $p_3$ vorliegt. In diesem Fall bestimmt der zentrale Prozessor 51 einen Schnittpunkt, den er als solchen unter der Kennung der Fahrzeugeinrichtung 30 in dem zweiten zentralen Datenspeicher 57 abspeichert. Damit hat der zentrale Prozessor 51 eine räumliche Korrelation der ersten Standortposition 81 ($p_3$) mit einem gespeicherten Geo-Objekt festgestellt, welches mit einer Korrelationsweglänge von 1200 Metern verknüpft ist.

Für den Verkehr in Gegenrichtung ist bei Einfahrt in den Tunnel 90a ein Geo-Objekt 95 in Form einer Linie vorgesehen. Die zentrale Datenverarbeitungseinrichtung 50 prüft nun zunächst, ob die erste von der Fahrzeugeinrichtung 30 empfangene Weglänge größer ist als die Korrelationsweglänge des Geo-Objekts 94. Da die erste Weglänge 100 Meter beträgt, ist das nicht der Fall. Auch die Prüfung der weiteren empfangenen Weglängen ergibt in keinem Fall ein Überschreiten der Korrelationsweglänge von 1200 Metern: Die zuletzt vor der zweien Standortposition empfangene größte weitere Weglänge beträgt 1100 Meter. Anhand des Empfangs der zweiten Standortposition 82 ($p_8$) stellt die zentrale Datenverarbeitungseinrichtung 50 fest, dass die Positionsbestimmungsunterbrechungsphase beendet ist, ohne dass die Weglänge ohne GNSS-Empfang die für diesen Tunnel vorgeschriebene Korrelationsweglänge überschritten hat. Daher erzeugt die zentrale Datenverarbeitungseinrichtung 50 in diesem Fall keine Fehlermeldung:

b) i) Fahrt durch einen nicht registrierten Tunnel und

ii) Fahrt mit Positionsdatenlücke auf kurzer Strecke

Für den Fall, dass die größte übermittelte Weglänge kleiner als die vorgegebene geo-objekt-unabhängige Höchstweglänge geblieben wäre, bevor eine Beendigung der Positionsbestimmungsunterbrechungsphase erfolgt, würde der zentrale Prozessor 51 kein Fehlersignal erzeugen. Dabei ist es nicht von Bedeutung, ob die Positionsbestimmungsunterbrechungsphase durch einen natürlichen Abschattungseffekt oder durch einen technischen Fehler oder eine Störung hervorgerufen wurde. Die Positionsbestimmungsunterbrechungsphase ist auch ohne eine Korrelation der ersten Standortposition 81 ($p_3$) mit einem gespeicherten Geo-Objekt in jedem Fall zu kurz, als dass es aus Erfindungssicht gerechtfertigt wäre ein Fehlersignal zu erzeugen.

c) Fahrt mit Positionsdatenlücke auf langer Strecke außerhalb eines Tunnels

Dieser Fall entspräche der Fig. 4a ohne die dargestellten Geo-Linien 94 und 95 ab dem Moment, in dem eine Weglänge durch die Fahrzeugeinrichtung 30 bestimmt und an die zentrale Datenverarbeitungseinrichtung übermittelt wurde, die größer ist als die geo-objekt-unabhängige Höchstweglänge von 1000 Metern.
Die Prüfung der übermittelten ersten Standortposition 81 ($p_3$) als letzte vor der Positionsbestimmungsunterbrechungsphase erfasste Standortposition von hinreichender Güte zusammen mit der vorletzten Standortposition $p_2$ auf Korrelation mit einem gespeicherten Geo-Objekt würde in diesem Fall keinen Schnittpunkt der Verbindungslinie zwischen $p_2$ und $p_3$ mit einer Geo-Linie der Geo-Objekt-Datenbank aus dem ersten Speicher 56 ergeben.
Da die Fahrzeugeinrichtung 30 eine Weglänge von 1100 Metern bestimmt und an die zentrale Datenverarbeitungseinrichtung 50 übermittelt, bevor sie anhand des Empfangs der zweiten Standortposition $p_8$ das Ende der Positionsbestimmungsunterbrechungsphase feststellt, sind in diesem Fall die beiden notwendigen Bedingungen für eine Erzeugung eines Fehlersignals erfüllt, und der zentrale Prozessor würde das erfindungsgemäße Fehlersignal auslösen.
Dieses Fehlersignal kann darin bestehen, eine Speicherung eines Sperrzustandes unter der Kennung der Fahrzeugeinrichtung in dem zweiten zentralen Datenspeicher 57 zu veranlassen. Beispielsweise kann damit der Wert eines im zweiten zentralen Datenspeicher 57 gespeicherten Zustandsparameters "Betriebsstatus" der Fahrzeugeinrichtung 30, der zuvor auf "entsperrt" gesetzt war, dadurch auf "gesperrt" gesetzt werden.
Im Zuge eines Statusabgleichs zwischen der Mautzentrale 58 und der Fahrzeugeinrichtung 30 wird der Wert des geänderten Zustandsparameters von der zentralen Datenverarbeitungseinrichtung 50 auf die Fahrzeugeinrichtung übertragen. Dieser Statusabgleich kann von der Fahrzeugeinrichtung 30 regelmäßig, zufällig oder ereignisabhängig durch eine Nachricht über das Mobilfunknetz 40 an die Mautzentrale 58 angefordert werden und/oder von der zentralen Datenverarbeitungseinrichtung 50 aufgrund des Fehlersignals mittels einer entsprechenden Nachricht, die den geänderten Wert des Zustandsparameters enthält, über das Mobilfunknetz 40 bewirkt werden.
Im Folgenden verhält sich die Fahrzeugeinrichtung 30 so wie zu dem ersten Ausführungsbeispiel beschrieben. Insbesondere kann es seinen Betriebszustand in Antwort auf ein Anfragesignal einer straßenseitigen Kontrolleinrichtung 60 mittels seines DSRC-Kommunikationsmoduls 20 (Fig. 2a) beziehungsweise seines DSRC-Sendeempfängers 23 (Fig. 2b) an die straßenseitige Kontrolleinrichtung übermitteln.

DRITTES AUSFÜHRUNGSBEISPIEL

In diesem dritten Ausführungsbeispiel wird ein Hybridvariante des ersten und zweiten Ausführungsbeispiels bereitgestellt, gemäß dem die Fahrzeugeinrichtung 30 eine bestimmte erste Standortposition 81 durch den Mobilfunk-Sendeempfänger 13 an die zentrale Datenverarbeitungseinrichtung 50 und/oder durch das DSRC-Kommunikationsmodul 20 beziehungsweise den DSRC-Sendeempfänger 23 an eine straßenseitige Kontrolleinrichtung 60 versendet, die ebenfalls die Definition einer zentralen Datenverarbeitungseinrichtung erfüllt.
Das in Fig. 2 dargestellte Mautsystem 70 kann insofern als unabhängiges erfindungsgemäßes System aufgefasst werden.
Wie Bestimmung von Standortpositionen und Positionsbestimmungsunterbrechungsphase erfolgt im dritten Ausführungsbeispiel genauso wie im zweiten Ausführungsbeispiel für den zurückgelegten Weg 80 in Fig. 4a und Fig. 4b . Andere, dem Fachmann geläufige Verfahren zur Datenglättung und -reduktion können alternativ verwendet werden, um aus verschieden eng oder weit polydistanten GNSS-Positionen äquidistante Standortpositionen zu gewinnen.

Im Unterschied zum zweiten Ausführungsbeispiel ist in diesem dritten Ausführungsbeispiel die objektunabhängige Höchstweglänge in der Fahrzeugeinrichtung 30, beispielsweise im Daten-Schreib-Lesespeicher 17a und/oder im Sicherheitsmodul 18 gespeichert.

Nachdem der Fahrzeuggerät-Prozessor 11 eine Positionsbestimmungsunterbrechungsphase ermittelt und als erste Standörtposition 81 die Standortposition $p_3$ bestimmt hat, weist der Fahrzeuggerät-Prozessor 11 den Mobilfunk-Sendeempfänger 13 an, die erste Standortposition 81 einschließlich ihrer beiden Vorgänger-Standortpositionen $p_1$ und $p_2$ sowie wenigstens einer der zuvor erwähnten Kennungen der Fahrzeugeinrichtung 30 von dem Fahrzeuggerät 10 mittels des über das Mobilfunknetz 40 an die zentrale Datenverarbeitungseinrichtung 50 zu übertragen.

In der zentralen Datenverarbeitungsvorrichtung 50 wird diese drei Standortpositionen kurze Fahrspurdatei über die zentrale Kommunikationseinrichtung 53, beispielsweise ein Gateway, empfangen und vom zentralen Prozessor 51 unter der Kennung 30 im zweiten zentralen Datenspeicher 57 der zentralen Datenverarbeitungseinrichtung 50 abgespeichert. In dem ersten zentralen Datenspeicher 56 der zentralen Datenverarbeitungseinrichtung 50 ist eine Datenbank mit Geo-Objekten gespeichert, die die geographische Lage der Tunneleingänge und Tunnelausgänge aller bekannten Tunnel von mehr als einem Kilometer Länge innerhalb eines geographischen Gebietes, für den der Betrieb der Fahrzeugeinrichtung vorgesehen ist, durch Geo-Linien repräsentiert, die jeweils durch ein erste vorbestimmte Position und zweite vorbestimmte Position gekennzeichnet sind. Tunnel, zu denen Geo-Objekte in dem ersten zentralen Datenspeicher 56 gespeichert sind, werden als registrierte Tunnel bezeichnet.

Alternativ (beispielsweise für den Fall, dass in dem Störungsgebiet kein Mobilfunknetz zur Verfügung steht) oder kumulativ kann der Fahrzeuggerät-Prozessor 11 auch das DSRC-Kommunikationsmoduls 20 (Fig. 1a) oder den fahrzeugseitigen DSRC-Sendeempfänger 23 (Fig. 1 b) anweisen, die erste Standortposition 81 einschließlich ihrer beiden Vorgänger-Standortpositionen $p_1$ und $p_2$ sowie wenigstens einer der zuvor erwähnten Kennungen der Fahrzeugeinrichtung 30 an eine straßenseitige Kontrolleinrichtung 60 zu übertragen.

Damit dies zeitnah erfolgen kann, ist in einer bekannten Störungsregion, beispielsweise in einem Tunnel, eine derartige straßenseitige Kontrolleinrichtung 60 installiert, die entsprechende Anforderungssignale aussendet, wobei das DSRC-Kommunikationsmodul 20/der DSRC-Sendeempfänger 23 seine Standortpositionen nur in Antwort auf den Empfang eines solchen Anforderungssignals an die straßenseitige Kontrolleinrichtung 60 versendet. In der straßenseitigen Kontrolleinrichtung 60 ist nur ein einziges Geo-Öbjekt gespeichert, nämlich das des Tunnels, in dem sie angeordnet ist. Daher genügt es, dass die straßenseitige Kontrolleinrichtung die empfangenen Standortpositionen mit nur mit diesem einen Geo-Objekt vergleicht.

Die Ermittlung der räumlichen Korrelation der von der Fahrzeugeinrichtung 30 empfangenen ersten Standortposition 81 ($p_3$) durch die zentrale Datenverarbeitungseinrichtung 50 beziehungsweise die straßenseitige Kontrolleinrichtung 60 erfolgt wie im zweiten Ausführungsbeispiel beschrieben.

Im Unterschied zum zweiten Ausführungsbeispiel versendet im dritten Ausführungsbeispiel bei Vorliegen einer räumlichen Korrelation der empfangenen ersten Standortposition 81 mit einem gespeicherten Geo-Objekt 94 die zentrale Datenverarbeitungseinrichtung 50 über das Mobilfunknetz 40 beziehungsweise die straßenseitige Kontrolleinrichtung 60 mittels ihres straßenseitigen DSRC-Sendeempfängers 63a die mit dem Geo-Objekt 94 verknüpfte Korrelationsweglänge an den Mobilfunk-Sendeempfänger 13 beziehungsweise das DSRS-Kommunikationsmodul 20/ den DSRC-Sendeempfänger 23 der Fahrzeugeinrichtung 30. Bei Fehlen einer räumlichen Korrelation jeder der empfangenen Standortpositionen versendet die zentrale Datenverarbeitungseinrichtung beziehungsweise straßenseitige Kontrolleinrichtung 60 eine Fehlernachricht oder überhaupt keine Nachricht an den Mobilfunk-Sendeempfänger 13 beziehungsweise das DSRS-Kommunikationsmodul 20/ den DSRC-Sendeempfänger 23.

Der Fahrzeuggerät-Prozessor 11 ist ausgebildet, bei ausbleibendem Empfang einer geo-objekt-abhängigen Korrelationsweglänge durch den Mobilfunk-Sendeempfänger 13 beziehungsweise das DSRS-Kommunikationsmodul 20/ den DSRC-Sendeempfänger 23 die gespeicherte geo-objekt-unabhängige Höchstweglänge als Referenzweglänge zum Vergleich mit den ermittelten Weglängen zu verwenden.

Anders als im zweiten Ausführungsbeispiel übersendet die Fahrzeugeinrichtung nicht die ermittelten Weglängen an die zentrale Datenverarbeitungseinrichtung 50 (und auch nicht an die straßenseitige Kontrolleinrichtung 60 , aus deren Sende-Empfangsbereich sie sich durch Fortbewegung des Fahrzeugs nach etwa 100 Metern entfernt hat), sondern prüft, solange die Positionsbestimmungsunterbrechungsphase mangels Empfangs einer der ersten Standortposition 81 nachfolgenden zweien Standortposition 82 von hinreichender Güte anhält, ob eine jeweils im Sekundentakt bestimmte Weglängen größer ist als die in der Fahrzeugeinrichtung 30 gespeicherte geoobjekt-unabhängige Höchstweglänge von 1000 Metern oder - falls sie eine entsprechende Korrelationsnachricht empfangen hat-größer ist als die mit der Korrelationsnachricht empfangene Korrelationsweglänge, die im Falle des registrierten Tunnels 90a von Fig. 4a 1200 Meter beträgt.

Im Übrigen erfolgt die Erzeugung eines oder keines Fehlersignals nach dem Schema des vorhergehenden Ausführungsbeispiels mit dem Unterschied, dass der Fahrzeuggerät-Prozessor 11 die Prüfung auf Überschreiten der Referenzweglänge (geo-objekt-unabhängige Höchstweglänge oder im Korrelationsfall die geo-objekt-abhängige Korrelationsweglänge des korrelierenden Geo-Objekts) durch eine bestimmte Weglänge innerhalb der Positionsbestimmungsunterbrechungsphase durchführt und bei einem positiven Prüfungsergebnis das Fehlersignal erzeugt.

Bezugszeichenliste

| | |
|---|---|
| 10 | Fahrzeuggerät |
| 11 | Fahrzeuggerät-Prozessor |
| 12 | GNSS-Positionsbestimmungsmodul |
| 12a | GNSS-Empfänger |
| 12b | GNSS-Empfangsantenne |
| 13 | Mobilfunk-Sendeempfänger (fahrzeugseitig) |
| 13b | Mobilfunk-Antenne (fahrzeugseitig) |
| 14 | Funkuhr |
| 15 | Anzeigeeinrichtung |
| 16a | Weggeber |
| 16b | Tachometer |
| 16c | Beschleunigungssensor |
| 16g | Gyroskop |
| 17a | Daten-Schreib-Lese-Speicher |
| 17b | Arbeitsspeicher |
| 18 | Sicherheitsmodul |
| 18a | autonomes Steuermodul des Sicherheitsmoduls 18 |
| 18b | Speicherbereich des Sicherheitsmoduls 18 |
| 19 | Stromversorgungsanschluss |
| 19a | Batterie |
| 20 | DSRC-Kommunikationsmodul (fahrzeugseitig) |
| 21 | DSRC-Kommunikationsmodul-Prozessor |
| 23 | DSRC-Sendeempfänger (fahrzeugseitig) |
| 23b | DSRC-Sende- und Empfangsmittel |
| 25 | DSRC-Kommunikationsmodul-Signalisierungsmittel |
| 27a | DSRC-Kommunikationsmodul-Daten-Schreib-Lese-Speicher |
| 27b | DSRC-Kommunikationsmodul-Arbeitsspeicher |
| 29a | DSRC-Kommunikationsmodul-Batterie |
| 30 | Fahrzeugeinrichtung |
| 35 | Fahrzeug |
| 40 | Mobilfunknetz |
| 50 | zentrale Datenverarbeitungseinrichtung |
| 51 | zentraler Prozessor |
| 53 | zentrale Kommunikationseinrichtung |
| 56 | erster zentraler Datenspeicher |
| 57 | zweiter zentraler Datenspeicher |
| 58 | Mautzentrale |
| 60 | Kontrolleinrichtung |
| 61 | Kontrollbrücke |
| 63 | Kontrollgerät |
| 63a | DSRC-Kommunikationseinrichtung (straßenseitig) |

| | |
|---|---|
| 70 | Mautsystem |
| 80 | Verlauf eines zurückgelegten Weges |
| 81 | erste Standortposition |
| 82 | zweite Standortposition |
| 90a | erstes Störungsgebiet, erster Tunnel |
| 90b | zweites Störungsgebiet, zweiter Tunnel |
| 91a | erstes Partner-Geo-Objekt zu erstem Störungsgebiet 90a |
| 91b | erstes Partner-Geo-Objekt zu zweitem Störungsgebiet 90b |
| 92a | zweites Partner-Geo-Objekt zu erstem Störungsgebiet 90a |
| 92a | zweites Partner-Geo-Objekt zu zweitem Störungsgebiet 90b |
| 93a | Solitär-Geo-Objekt zu erstem Störungsgebiet 90a |
| 93a | Solitär-Geo-Objekt zu zweitem Störungsgebiet 90b |
| 94 | erstes linienförmiges Geo-Objekt zu erstem Störungsgebiet 90a |
| 95 | zweites linienförmiges Geo-Objekt zu erstem Störungsgebiet 90a |

| | |
|---|---|
| $p_i$ | i-te Standportposition |
| $s, s_i, s_{max}$ | Weglänge, erste Weglänge |
| $s_{j,i}$ | j-te Weglänge, die seit der i-ten Standortposition zurückgelegt wurde |
| s ini | Weglänge, die die Feststellung einer Positionsbestimmungsunterbrechungsphase auslöst |
| L | geo-objekt-abhängige Korrelationsweglänge |
| M | Mindestweglänge zur Feststellung einer Positionsbestimmungsunterbrechungsphase |
| W | geo-objekt-unabhängige Höchstweglänge |

**Patentansprüche**

1. Datenverarbeitungseinrichtung (11 / 50, 51), welche ausgebildet ist,

- wenigstens eine erste Standortposition (81), die einen Standort einer von einem Fahrzeug (35) mitgeführten Positionsbestimmungseinrichtung (12) repräsentiert, von dieser Positionsbestimmungseinrichtung (12 / 10, 30) zu empfangen oder aus Positionsdaten zu erzeugen, die sie von dieser Positionsbestimmungseinrichtung (12 / 10, 30) empfangen hat,
- wenigstens eine erste Weglänge (s), die ausgehend von der ersten Standortposition (81) von dem Fahrzeug (35) zurückgelegt wurde, zu empfangen oder zu bestimmen

und

- wenigstens einen ersten Datenspeicher (17a, 18b / 56) aufweist oder zumindest zeitweise kommunikationstechnisch an einen solchen gekoppelt ist, in dem wenigstens ein Geo-Objekt (91 a, 93a, 94) das durch wenigstens eine vorbestimmte Position gekennzeichnet ist, gespeichert ist,

**dadurch gekennzeichnet, dass**

und die Datenverarbeitungseinrichtung (11 / 50, 51) ausgebildet ist,

- das Vorliegen einer Positionsbestimmungsunterbrechungsphase daran festzustellen, dass die Bereitstellung wenigstens einer, einer ersten Standortposition (81) zeitlich nachfolgenden, zweiten Standortposition (82) von einer vorgegebenen Mindestgüte, gänzlich oder von zu deren Erzeugung dienlichen Positionsdaten durch die Positionsbestimmungseinrichtung (12 / 10, 30) unterbleibt,
- zu ermitteln, ob die erste Standortposition (81) räumlich mit wenigstens einem gespeicherten Geo-Objekt (91a, 93a, 94) korreliert, und
- in Abhängigkeit von einem ermittelten Mangel oder Bestehen einer räumlichen Korrelation der ersten Standortposition (81) mit wenigstens einem gespeicherten Geo-Objekt (91a, 93a, 94) ein Fehlersignal zu erzeugen, wenn

i) sie das Vorliegen einer Positionsbestimmungsunterbrechungsphase feststellen konnte und
ii) die erste Weglänge (s) größer ist als eine Referenzweglänge (L, W).

2. Datenverarbeitungseinrichtung (11 / 50, 51) nach Anspruch 1 **dadurch gekennzeichnet, dass** die Datenverarbeitungseinrichtung (11 / 50, 51) ausgebildet ist, ein Fehlersignal zu erzeugen, wenn

- sie eine räumliche Korrelation der ersten Standortposition (81) mit wenigstens einem gespeicherten Geo-Objekte (91a, 93a, 94) feststellen konnte, und

die Referenzweglänge eine von dem wenigstens einen mit der ersten Standortposition (81) räumlich korrelierenden Geo-Objekt (91 a, 93a, 94) abhängige Korrelationsweglänge (L) ist.

3. Datenverarbeitungseinrichtung (11 / 50, 51) nach einem der vorhergehenden Ansprüche **dadurch gekennzeichnet, dass** die Datenverarbeitungseinrichtung (11 / 50, 51) ausgebildet ist, ein Fehlersignal zu erzeugen, wenn sie keine räumliche Korrelation der ersten Standortposition (81) mit wenigstens einem gespeicherten Geo-Objekt (91a, 93a, 94) feststellen konnte, und

dass die Referenzweglänge eine vorgegebene geoobjekt-unabhängige Höchstweglänge (W) ist.

4. Datenverarbeitungseinrichtung (11 / 50, 51) nach einem der vorhergehenden Ansprüche **dadurch gekennzeichnet, dass** die Datenverarbeitungseinrichtung (11 / 50, 51) ausgebildet ist, infolge der Feststellung des Vorliegens einer Positionsbestimmungsunterbrechungsphase wiederholt erste Weglängen ($s_i$) zu bestimmen, die zu einander nachfolgenden Zeitpunkten ausgehend von der ersten Standortposition (81) von dem Fahrzeug (35) zurückgelegt wurden, und ein Fehlersignal zu erzeugen, wenn während der Positionsbestimmungsunterbrechungsphase wenigstens eine der bestimmten ersten Weglängen ($s_i$) die Referenzweglänge (L, W) übersteigt.

5. Datenverarbeitungseinrichtung (11 / 50, 51) nach einem der vorhergehenden Ansprüche **dadurch gekennzeichnet, dass** die Datenverarbeitungseinrichtung (11 / 50, 51) ausgebildet ist, eine Beendigung der Positionsbestimmungsunterbrechungsphase daran festzustellen, dass sie wenigstens eine, der ersten Standortposition (81) zeitlich nachfolgende, zweite Standortposition (82) von einer vorgegebenen Mindestgüte oder zu ihrer Erzeugung dienliche Positionsdaten von der Positionsbestimmungseinrichtung (12) empfängt, und infolge der Feststellung einer Beendigung der Positionsbestimmungsunterbrechungsphase keine erste Weglänge ($s > s_{max}$) zu bestimmen und/ oder einem Vergleich mit der Referenzweglänge (L, W) zu unterwerfen, die von dem Fahrzeug (35) ausgehend von der ersten Standortposition (81) über die zweite Standortposition (82) hinaus zurückgelegt wurde.

6. Datenverarbeitungseinrichtung (11 / 50, 51) nach einem der vorhergehenden Ansprüche, **dadurch gekennzeichnet, dass** die Datenverarbeitungseinrichtung (11 / 50, 51) ausgebildet ist, im Falle der Feststellung des Vorliegens einer Positionsbestimmungsunterbrechungsphase

- so oft einander zeitlich nachfolgend die Schrittkombination

a) des Bestimmens einer ersten Weglänge (s i), die ausgehend von der ersten Standortposition (81) von dem Fahrzeug (35) zurückgelegt wurde und
b) des Prüfens, ob die erste Weglänge (s i) größer ist als die Referenzweglänge (L, W), zu wiederholen, bis entweder

i) die erste Weglänge (s) größer ist als die Referenzweglänge (L, W) oder

ii) die Datenverarbeitungseinrichtung wenigstens eine, der ersten Standortposition (81) zeitlich nachfolgende, zweite Standortposition (81) von einer vorgegebenen Mindestgüte oder zu ihrer Erzeugung dienliche Positionsdaten von der Positionsbestimmungseinrichtung (12) empfängt und damit das Ende der Positionsbestimmungsunterbrechungsphase feststellt,

und

- ein Fehlersignal zu erzeugen, wenn die erste Weglänge (s) größer ist als die Referenzweglänge (L, W), bevor die Datenverarbeitungseinrichtung (11 / 50, 51) das Ende der Positionsbestimmungsunterbrechungsphase feststellt.

7. Datenverarbeitungseinrichtung (11 / 50, 51) nach einem der vorhergehenden Ansprüche **dadurch gekennzeichnet, dass** die Datenverarbeitungseinrichtung (11 / 50, 51) ausgebildet ist, das Vorliegen einer Positionsbestimmungsunterbrechungsphase daran festzustellen, dass die Bereitstellung wenigstens einer der ersten Standortposition (81) zeitlich nachfolgenden zweiten Standortposition (82) von einer vorgegebenen Mindestgüte, gänzlich oder von zu deren Erzeugung dienlichen Positionsdaten innerhalb eines vorgegebenen ersten Zeitrahmens nach der Bereitstellung der ersten Standortposition (81) durch die Positionsbestimmungseinrichtung (12) unterbleibt.

8. Datenverarbeitungseinrichtung (11 / 50, 51) nach einem der vorhergehenden Ansprüche **dadurch gekennzeichnet, dass** die Datenverarbeitungseinrichtung (11 / 50, 51) ausgebildet ist, wiederholt aus von wenigstens einer, von dem Fahrzeug mitgeführten, Beschleunigungs-, Geschwindigkeits- und/ oder Weglängenmesseinrichtung (16c, 16b, 16a) empfangenen Beschleunigungs-, Geschwindigkeits- und/ oder Weglängenmesswerten Weglängen ($s_i$) zu bestimmen, die ausgehend von der ersten Standortposition (81) von dem Fahrzeug (35) zurückgelegt wurden, und das Vorliegen einer Positionsbestimmungsunterbrechungsphase daran festzustellen, dass die Bereitstellung wenigstens einer der ersten Standortposition (81) zeitlich nachfolgenden zweiten Standortposition (82) von einer vorgegebenen Mindestgüte, gänzlich oder von zu deren Erzeugung dienlichen Positionsdaten durch die Positionsbestimmungseinrichtung zumindest solange unterbleibt, bis eine bestimmte Weglänge ($s_{ini}$) eine vorgegebenen Mindestweglänge (M) überschritten hat.

9. Fahrzeugeinrichtung (10, 30) mit wenigstens einer Datenverarbeitungseinrichtung (11) nach einem der vorhergehenden Ansprüche,

- wenigstens einer Positionsbestimmungseinrichtung (12), die zumindest zeitweise kommunikationstechnisch an die Datenverarbeitungseinrichtung (11) gekoppelt ist, und
- wenigstens einer Beschleunigungs-, Geschwindigkeits- und/ oder Weglängenmesseinrichtung (16c, 16b, 16a), die zumindest zeitweise kommunikationstechnisch an die Datenverarbeitungseinrichtung (11/ 50, 51) gekoppelt ist,

wobei
die Positionsbestimmungseinrichtung (12) ausgebildet ist,

- Navigationssignale von Navigationssatelliten wenigstens eines Globalen Navigationssatellitensystems zu empfangen und
- anhand der empfangenen Navigationssignale die Standortpositionen, ($p_i$) zu erzeugen oder die Positionsdaten zu erzeugen, aus denen die Datenverarbeitungseinrichtung (11) die Standortpositionen (perzeugt, und

die Datenverarbeitungseinrichtung (11) ausgebildet ist,

- von der Positionsbestimmungseinrichtung (12) bereitgestellte Standortpositionen zu empfangen oder aus von dieser Positionsbestimmungseinrichtung (12) bereitgestellten Positionsdaten zu erzeugen,
- aus diesen Standortpositionen (p i) anhand der Feststellung einer Positionsbestimmungsunterbrechungsphase die erste Standortposition (81) zu bestimmen,
- von der Beschleunigungs-, Geschwindigkeits- und/ oder Weglängenmesseinrichtung (16c; 16b, 16a) Beschleunigungs-, Geschwindigkeits- und/ oder Weglängenmesswerte zu empfangen und
- anhand von wenigstens einem der empfangenen Messwerte die erste Weglänge (s) zu bestimmen.

10. Fahrzeugeinrichtung (10, 30) nach Anspruch 9 **dadurch gekennzeichnet, dass** die Positionsbestimmungseinrichtung (12) ausgebildet ist,

- im Falle dessen, dass sie keine Navigationssignale empfängt oder anhand der empfangenen Navigationssignale keine Standortposition oder Positionsdaten bestimmen kann, eine Information über eine mangelnde Positionsbestimmung generiert und diese Information der Datenverarbeitungseinrichtung (11) bereitstellt,

und die Datenverarbeitungseinrichtung (11) ausgebildet ist,

- die Information über eine mangelnde Positionsbestimmung von der Positionsbestimmungseinrichtung (12) zu erfassen und
- das gänzliche Unterbleiben der Bereitstellung wenigstens einer der ersten Standortposition (81) zeitlich nachfolgenden zweiten Standortposition (82) durch die Positionsbestimmungseinrichtung daran festzustellen, dass sie eine Information oder eine bestimmte Anzahl an Informationen über eine . mangelnde Positionsbestimmung von der Positionsbestimmungseinrichtung (12) erfasst hat.

11. Fahrzeugeinrichtung (10, 30) nach einem der Ansprüche 9 bis 10 **dadurch gekennzeichnet, dass** die Positionsbestimmungseinrichtung ausgebildet ist,

- der Datenverarbeitungseinrichtung (11) Standortpositionen ($p_i$) oder Positionsdatensätze zusammen mit einer Information über die Güte der jeweiligen Standortposition ($p_i$) oder des jeweiligen Positionsdatensatzes bereitzustellen,

und die Datenverarbeitungseinrichtung (11) ausgebildet ist,

- die Information über die Güte der jeweiligen Standortposition (pi) oder des jeweiligen Positionsdatensatzes zusammen mit der jeweiligen Standortposition ($p_i$) oder dem jeweiligen Positionsdatensatz zu empfangen, und
- das Vorliegen einer Positionsbestimmungsunterbrechungsphase daran festzustellen, dass von den über die erste Standortpositionen (81) oder des zur Erzeugung der ersten Standörtposition (81) dienlichen Positionsdatensatzes hinaus bereitgestellten weiteren Standortpositionen ($p_j$, j>i)) oder Positionsdatensätzen eine bestimmte Anzahl nicht die Güte der vorgegebenen Mindestgüte erreicht.

12. Fahrzeugeinrichtung (10, 30) nach einem der Ansprüche 9 bis 11 **dadurch gekennzeichnet, dass** die Fahrzeugeinrichtung (10, 30) wenigstens eine erste Kommunikationseinrichtung (13) aufweist und in einem Zustand gegebener Betriebsbereitschaft ausgebildet ist,

- keine mangelnde Betriebsbereitschaft und/ oder eine gegebene Betriebsbereitschaft zu signalisieren,
- von der Positionsbestimmungseinrichtung (12) empfangene oder aus von der Positionsbestimmungseinrichtung (10) empfangenen Positionsdaten erzeugte Standortpositionen ($p_i$) in einer Trajektoriendatei zu speichern, die den Verlauf eines von dem Fahrzeug (35) zurückgelegten Weges (80) repräsentiert,
- eine Vollständigkeit diese Trajektoriendatei zu überwachen,
- die Trajektoriendatei, wenn sie vollständig ist, mittels der ersten Kommunikationseinrichtung (13) an eine außerhalb und beabstandet vom Fahrzeug angeordneten zentrale Datenverarbeitungseinrichtung (50) zu versenden und
- die Anzahl von erzeugten Fehlersignalen zu zählen und
- bei Erreichen oder Überschreiten einer vorgegebenen Maximalanzahl von erzeugten Fehlersignalen in einen Zustand der mangelnden Betriebsbereitschaft zu wechseln,

wobei die Fahrzeugeinrichtung im Zustand mangelnder Betriebsbereitschaft ausgebildet ist,

- eine mangelnde Betriebsbereitschaft und/ oder keine gegebene Betriebsbereitschaft zu signalisieren und
- die im Zustand gegebener Betriebsbereitschaft zuletzt gespeicherte Trajektoriendatei, die die zuletzt gespeicherte erste Standortposition umfasst, unabhängig von ihrer Vollständigkeit mittels der ersten Kommunikationseinrichtung an die zentrale Datenverarbeitungseinrichtung (50) zu versenden.

13. System (70) mit wenigstens einer Fahrzeugeinrichtung (10, 30) nach einem der Ansprüche 9 bis 12 und wenigstens einer außerhalb und beabstandet vom Fahrzeug (35) angeordneten zentralen Datenverarbeitungseinrichtung (50),
wobei
die Fahrzeugeinrichtung (10, 30) wenigstens eine erste Kommunikationseinrichtung (13) aufweist und ausgebildet ist,

- erste Standortpositionen (81) in einem Datenspeicher (17a, 18b) der Fahrzeugeinrichtung (10, 30) zu speichern, und
- ausgelöst durch das Fehlersignal eine Fehlernachricht mittels der ersten Kommunikationseinrichtung (13) an die zentrale Datenverarbeitungseinrichtung (50) zu versenden,

die zentrale Datenverarbeitungseinrichtung (50) ausgebildet ist,

- Fehlernachrichten von Fahrzeugeinrichtungen (10, 30) zu empfangen,
- von jeweils einer Fahrzeugeinrichtung (10, 30) eingegangene Fehlernachrichten zu zählen und
- bei Erreichen oder Überschreiten einer vorgegebenen Maximalanzahl an von der Fahrzeugeinrichtung (10, 30) eingegangen Fehlersignalen eine Aufforderungsnachricht an diese Fahrzeugeinrichtung (10, 30) zu versenden,

und
die Fahrzeugeinrichtung (10, 30) ausgebildet ist,

- die gesendete Aufforderungsnachricht mittels der ersten Kommunikationseinrichtung (13) zu empfangen und
- in Antwort auf die Aufforderungsnachricht wenigstens eine erste Standortposition (81), insbesondere die zuletzt gespeicherte, mittels der ersten Kommunikationseinrichtung (13) an die zentrale Datenverarbeitungseinrichtung (50) zu versenden.

14. System (70) mit

- wenigstens einer von einem Fahrzeug (35) mitgeführten Fahrzeugeinrichtung (10, 30) und
- wenigstens einer abseits und beabstandet von dem Fahrzeug (35) angeordneten, nicht von dem Fahrzeug mitgeführten zentralen Datenverarbeitungseinrichtung (50, 60),

wobei die Fahrzeugeinrichtung

- wenigstens eine Positionsbestimmungseinrichtung (12),
- wenigstens eine dezentrale Datenverarbeitungseinrichtung (11),
- wenigstens eine Beschleunigungs-, Geschwindigkeits- und/ oder Weglängenmesseinrichtung (16c, 16b, 16a) und
- wenigstens eine erste Kommunikationseinrichtung (13) aufweist und

wobei
die dezentrale Datenverarbeitungseinrichtung (11) ausgebildet ist,

- wenigstens eine erste Standortposition (81), die einen Standort der von einem Fahrzeug (35) mitgeführten Positionsbestimmungseinrichtung (12) repräsentiert, von dieser Positionsbestimmungseinrichtung (12) zu empfangen oder aus Positionsdaten zu erzeugen, die sie von dieser Positionsbestimmungseinrichtung (12) empfangen hat, und
- eine erste Weglänge (s), die ausgehend von der ersten Standortposition von dem Fahrzeug zurückgelegt wurde, zu empfangen, wenn diese erste Weglänge (s) zuvor aus wenigstens einem Beschleunigungs-, Geschwindigkeits- und/ oder Weglängenmesswert der Beschleunigungs-, Geschwindigkeits- und/ oder Weglängenmesseinrichtung (16c, 16b, 16a) bestimmt wurde, oder diese erste Weglänge aus wenigstens einem von der Beschleunigungs-, Geschwindigkeits- und/ oder Weglängenmesseinrichtung (16c, 16b, 16a) empfangenen Beschleunigungs-, Geschwindigkeits- und/ oder Weglängenmesswert zu bestimmen,

**dadurch gekennzeichnet, dass**
die dezentrale Datenverarbeitungseinrichtung (11) ausgebildet ist,

- das Vorliegen einer Positionsbestimmungsunterbrechungsphase daran festzustellen, dass die Bereitstellung wenigstens einer, der ersten Standortposition (81) zeitlich nachfolgenden, zweiten Standortposition (82) von einer vorgegebenen Mindestgüte, gänzlich oder von zu deren Erzeugung dienlichen Positionsdaten durch die Positionsbestimmungseinrichtung (12) unterbleibt und
- im Falle der Feststellung des Vorliegens einer Positionsbestimmungsunterbrechungsphase wenigstens die erste Standortposition (81) mittels der ersten Kommunikationseinrichtung (13, 23) an die zentrale Datenverarbeitungseinrichtung (50, 60) zu senden,

wobei
die zentrale Datenverarbeitungseinrichtung (50, 60)

- wenigstens einen ersten Datenspeicher (56) aufweist oder zumindest zeitweise kommunikationstechnisch an einen solchen gekoppelt ist, in dem wenigstens ein, durch wenigstens eine vorbestimmte Position gekennzeichnetes, Geo-Objekt (91a, 93a, 94) gespeichert ist,

und ausgebildet ist,

- zu ermitteln, ob die erste Standortposition (81) räumlich mit wenigstens einem gespeicherten Geo-Objekte (91a, 93a, 94) korreliert, und,
- falls sie eine räumliche Korrelation der ersten Standortposition (81) mit wenigstens einem gespeicherten Geo-Objekt (91a, 93a, 94) ermitteln konnte, eine Korrelationsnachricht zusammen mit einer geo-objekt-abhängigen Korrelationsweglänge (L), die von ermittelten korrelierenden Geo-Objekt (91a, 93a, 94) abhängt, das mit der ersten Standortposition (81) räumlich korreliert, an die Fahrzeugeinrichtung (10, 30) zu senden,

und die dezentrale Datenverarbeitungseinrichtung (11) ausgebildet ist,

- die Korrelationsnachricht zusammen mit der geo-objekt-abhängigen Korrelationsweglänge (L) von der zentralen Datenverarbeitungseinrichtung (50, 60) zu empfangen,
- im Falle des Empfangs einer geo-objekt-abhängigen Korrelationsweglänge (L) ein Fehlersignal zu erzeugen, wenn die erste Weglänge (s) größer ist als die empfangene geo-objekt-abhängige Korrelationsweglänge (L) und
- im Falle keines Empfangs einer geo-objekt-abhängigen Korrelationsweglänge ein Fehlersignal zu erzeugen, wenn die erste Weglänge (s) größer ist als eine geo-objekt-unabhängige Höchstweglänge (W).

15. Verfahren zur Prüfung der Erfüllung der bestimmungsgemäßen Funktion einer von einem Fahrzeug (35) mitgeführten Positionsbestimmungseinrichtung (12) mit folgenden Schritten:

- Empfang wenigstens einer von der Positionsbestimmungseinrichtung (12) bereitgestellten ersten Standortposition (81), die einen Standort einer von einem Fahrzeug (35) mitgeführten Positionsbestimmungseinrichtung (12 / 10, 30) repräsentiert, oder Erzeugung derselben aus von der Positionsbestimmungseinrichtung (12 / 10, 30) bereitgestellten Positionsdaten,
- Empfang wenigstens eines Beschleunigungs-, Geschwindigkeits- und/ oder Weglängenmesswertes von wenigstens einer, von dem Fahrzeug mitgeführten, Beschleunigungs-, Geschwindigkeits- und/ oder Weglängenmesseinrichtung (16c, 16b, 16a),

**gekennzeichnet durch**

- die Bereitstellung wenigstens eines, **durch** wenigstens eine vorbestimmte Position gekennzeichneten, Geo-Objektes (91 a, 93a, 94) **durch** einen Speicher (17a, 18b / 56),
- die Bestimmung wenigstens einer ersten Weglänge (s), die ausgehend von der ersten Standortposition (81) von dem Fahrzeug (35) zurückgelegt wurde, aus dem wenigstens einem empfangenen Beschleunigungs-, Geschwindigkeits- und/ oder Weglängenmesswert,
- die Feststellung des Vorliegens eine Positionsbestimmungsunterbrechungsphase daran, dass die Bereitstellung wenigstens einer, der ersten Standortposition (81) zeitlich nachfolgenden, zweiten Standortposition (82) von einer vorgegebenen Mindestgüte, gänzlich oder von zu deren Erzeugung dienlichen Positionsdaten **durch** die Positionsbestimmungseinrichtung (12 / 10, 30) unterbleibt,

- die Ermittlung, ob die erste Standortposition (81) räumlich mit wenigstens einem Geo-Objekt (91 a, 93a, 94) korreliert,
und
- der Erzeugung eines Fehlersignals, wenn

i) eine räumliche Korrelation der ersten Standortposition (81) mit wenigstens einem Geo-Objekt (91a, 93a, 94) ermittelt werden konnte und die erste Weglänge (s) größer ist als eine vorgegebene geo-objekt-abhängige Korrelationsweglänge (L), die mit einem ermittelten Geo-Objekt (91a, 93a, 94) verknüpft ist,
oder wenn

ii) keine räumliche Korrelation der ersten Standortposition mit einem Geo-Objekt (91a, 93a, 94) ermittelt werden konnte und die erste Weglänge (s) größer ist als eine vorgegebene geo-objekt-unabhängige Höchstweglänge (W).

EP 3 279 870 A1

**Fig. 1a**

32

**Fig. 1b**

**Fig. 2a**

**Fig. 2b**

**Fig. 3a**

**Fig. 3a'**

81

82

$p_{10}$

$p_9$

$p_8 = x_2$

$p_7$

$p_6$

$s_{max} = 720\ m$

80

$p_1$

$p_2$

$p_3 = x_1$

$p_4$

$p_5$

**Fig. 3b**

81

82

$p_{10}$

$p_9$

$p_8 = x_2$

$p_7$

$p_6$

$s > W = 1000\ m$

80

$p_1$

$p_2$

$p_3 = x_1$

$p_4$

$p_5$

**Fig. 3c**

**Fig. 3d**

**Fig. 3d'**

**Fig. 4a**

**Fig. 4b**

EP 3 279 870 A1

**Europäisches Patentamt**
**European Patent Office**
**Office européen des brevets**

# EUROPÄISCHER RECHERCHENBERICHT

Nummer der Anmeldung

EP 16 00 1711

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 924 662 A1 (KAPSCH TRAFFICCOM AG [AT]) 30. September 2015 (2015-09-30) | 1-13,15 | INV. G07B15/06 |
| A | * Zusammenfassung *<br>* Absätze [0006] - [0038] *<br>----- | 14 | G01S19/20<br>G01S19/48<br>G01C21/28<br>G01S19/14 |
| X | EP 2 811 467 A2 (TOLL COLLECT GMBH [DE]) 10. Dezember 2014 (2014-12-10) | 1-13,15 | |
| A | * Zusammenfassung *<br>* Absätze [0001] - [0047] *<br>* Absätze [0099] - [0129] *<br>----- | 14 | |
| X | DE 20 2016 001371 U1 (TOLL COLLECT GMBH [DE]) 12. April 2016 (2016-04-12) | 1-3,9,<br>13,15 | |
| A | * Zusammenfassung; Abbildungen 1a,1b,1c *<br>* Absätze [0073] - [0118] *<br>----- | 4-8,<br>10-12,14 | |
| A | US 2014/278838 A1 (NOVAK KEVIN MARK [US]) 18. September 2014 (2014-09-18)<br>* Zusammenfassung; Abbildungen 1,3 *<br>* Absätze [0018] - [0060] *<br>----- | 1-15 | |
| A | EP 3 002 734 A1 (TOLL COLLECT GMBH [DE]) 6. April 2016 (2016-04-06)<br>* Zusammenfassung; Abbildung 3 *<br>* Absätze [0026], [0027], [0133] - [0135] *<br>* Absätze [0147] - [0154] *<br>----- | 12 | **RECHERCHIERTE SACHGEBIETE (IPC)**<br><br>G07B<br>G01C<br>G01S |

Der vorliegende Recherchenbericht wurde für alle Patentansprüche erstellt

| Recherchenort | Abschlußdatum der Recherche | Prüfer |
|---|---|---|
| Den Haag | 21. Februar 2017 | Pfyffer, Gregor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................................
& : Mitglied der gleichen Patentfamilie, übereinstimmendes Dokument

EPO FORM 1503 03.82 (P04C03)

40

**ANHANG ZUM EUROPÄISCHEN RECHERCHENBERICHT
ÜBER DIE EUROPÄISCHE PATENTANMELDUNG NR.**

EP 16 00 1711

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-02-2017

| Im Recherchenbericht angeführtes Patentdokument | Datum der Veröffentlichung | Mitglied(er) der Patentfamilie | Datum der Veröffentlichung |
|---|---|---|---|
| EP 2924662 A1 | 30-09-2015 | DK 2924662 T3<br>EP 2924662 A1<br>ES 2599783 T3<br>SI 2924662 T1 | 21-11-2016<br>30-09-2015<br>03-02-2017<br>30-12-2016 |
| EP 2811467 A2 | 10-12-2014 | EP 2811466 A2<br>EP 2811467 A2<br>EP 2811468 A2 | 10-12-2014<br>10-12-2014<br>10-12-2014 |
| DE 202016001371 U1 | 12-04-2016 | KEINE | |
| US 2014278838 A1 | 18-09-2014 | AU 2014244449 A1<br>CA 2905420 A1<br>CN 105210119 A<br>US 2014278838 A1<br>WO 2014159769 A1 | 01-10-2015<br>02-10-2014<br>30-12-2015<br>18-09-2014<br>02-10-2014 |
| EP 3002734 A1 | 06-04-2016 | KEINE | |

EPO FORM P0461

Für nähere Einzelheiten zu diesem Anhang : siehe Amtsblatt des Europäischen Patentamts, Nr.12/82